(19) Europäisches Patentamt / European Patent Office / Office européen des brevets

(11) **EP 1 770 743 A2**

(12) **EUROPÄISCHE PATENTANMELDUNG**

(43) Veröffentlichungstag:
**04.04.2007 Patentblatt 2007/14**

(21) Anmeldenummer: **06018283.9**

(22) Anmeldetag: **01.09.2006**

(51) Int Cl.:
*H01J 5/20* (2006.01)   *H01J 61/36* (2006.01)
*H01J 61/02* (2006.01)   *H01J 61/30* (2006.01)
*H01J 9/26* (2006.01)   *C03C 27/04* (2006.01)
*C03C 27/06* (2006.01)   *C03C 8/24* (2006.01)
*C04B 37/04* (2006.01)

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **30.09.2005  DE 102005047006**

(71) Anmelder: **Schott AG**
**55122 Mainz (DE)**

(72) Erfinder:
• **Peuchert, Ulrich, Dr.**
**55294 Bodenheim (DE)**

• **Zachau, Thilo, Dr.**
**68642 Bürstadt-Riedrode (DE)**
• **Bhosale, Rohit**
**84028 Landshut (DE)**
• **Besinger, Jörn, Dr.**
**84032 Landshut (DE)**
• **Sprenger, Dirk, Dr.**
**55271 Stadecken-Elsheim (DE)**
• **Nattermann, Kurt, Dr.**
**55437 Ockenheim (DE)**
• **van Elst, Henk**
**3902 VB Veenendal (NL)**

(74) Vertreter: **Sawodny, Michael-Wolfgang**
**Dreiköniggasse 10**
**89073 Ulm (DE)**

(54) **Verbundsystem, Verfahren zur Herstellung eines Verbundsystems und Leuchtkörper**

(57)    Die Erfindung betrifft ein Verbundsystem, Verfahren zur Herstellung eines Verbundsystems sowie einen Leuchtkörper.

Erfindungsgemäß ist der Verbund zwischen zwei miteinander zu verbindenden Komponenten, wobei wenigstens eine der beiden wenigstens teilweise, vorzugsweise vollständig aus Glas oder Glaskeramik, d.h. aus einem glasbasierenden Material besteht, grundsätzlich durch nachfolgend beschriebene Möglichkeiten für sich allein erzeugbar:

1) durch Stoffschluss unter Verwendung eines anorganischen glasbasierenden Lotmaterials oder

2) durch Verschlussmechanismen frei von Lotmaterial unter Ausnutzung von Zug- und/oder Druckspannungszuständen zumindest im Hochtemperaturbereich

Gemäß einer besonders vorteilhaften Ausführung werden beide Möglichkeiten miteinander kombiniert, wobei in diesem Fall ein Lotmaterial eingesetzt wird.

Fig.1a

EP 1 770 743 A2

## Fig.1b

**Beschreibung**

Die Erfindung betrifft ein Verbundsystem, umfassend wenigstens zwei Komponenten, wobei wenigstens eine aus Glas oder Glaskeramik besteht, im Einzelnen mit den Merkmalen aus den Oberbegriffen der Ansprüche 1 und 2; ferner ein Verfahren zur Herstellung eines Verbundsystems und einen Leuchtkörper aus einem erfindungsgemäßen Verbundsystem.

Leuchtkörper, umfassend ein Kolbenelement, vorzugsweise Glaskolbenelement in den unterschiedlichsten Ausführungen können in vielfältigen Anwendungsbereichen bzw. in vielfältigen Typen von Lampen vorliegen, beispielsweise im Bereich der allgemeinen Beleuchtung oder der Automobilbeleuchtung bzw. in Temperaturstrahlern, wie Halogenlampen oder Glühlampen bzw. in Hochdruck- oder Niederdruckentladungslampen. Insbesondere können die erfindungsgemäßen Leuchtkörper auch miniaturisiert zum so genannten "Backlighting" im Zusammenhang mit der Hintergrundbeleuchtung von Flachbildschirmen eingesetzt werden. Ebenso speziell geeignet sind die erfindungsgemäßen Kolbenelemente für Metallhalogenid- Hochdruckentladungslampen. Bei herkömmlichen Beleuchtungsquellen wie Glühlampen, Halogenlampen und Gasentladungslampen haben die transparenten Kolben, bevorzugt aus Glas oder transluzenter Keramik in gestreckt zylindrischer oder gedrungen - bauchiger Form, im Wesentlichen zwei unterschiedliche Aufgaben, wie unten beschrieben.

Im Rahmen der vorliegenden Erfindung werden Lampen bzw. Anwendungen definiert, bei denen das Kolbenelement die erste Umhüllende der Licht emittierenden Einheit, beispielsweise des Filamentes, und/oder als hermetisch dichter Körper für Schutz- bzw. Entladungsgase verwendet wird.

Diese Anwendungen werden im Rahmen dieser Anmeldung als Typ A-Anwendungen bezeichnet. Hierunter fallen insbesondere Lampen des Typs "Glühbirne" oder "Halogenstrahler" in denen eine stromdurchflossene und dadurch stark erhitzte Wolframwendel Licht aussendet, beispielsweise Glühbirnen oder Halogenstrahler. Zur Erhöhung der Lebensdauer sowie Steigerung der Lichtausbeute werden bei derartigen Lampen die Kolben mit Edelgasen wie Krypton, Argon oder Xenon befüllt. Im Falle von Halogenlampen sind die Füllgase Halogenide, welche sich mit dem von der Wendel abdampfenden Wolfram in den kälteren Zonen des Kolbeninnenraumes verbinden und an der heißen Wolframwendel wieder zersetzen, wobei die Abscheidung von Wolfram gerade an den heißesten, also dünnsten, Stellen der Wendel deren "Ausheilen", also eine Lebensdauerverlängerung bewirkt. Dies bezeichnet man als Halogenkreislauf. Die Halogenzusätze verhindern auch die Kolbenschwärzung durch Metallspiegel und die mit ihr einhergehende Lichtstromabnahme praktisch völlig, da eine Kondensation metallischen Wolframs an der Kolbeninnenseite durch die Bildung der Wolframhalogenide unterbunden wird. Deshalb kann bei Halogen-Glühlampen die Kolbengröße stark verkleinert und der Füllgasdruck erhöht werden, und andererseits wird der wirtschaftliche Einsatz der Edelgase Krypton und Xenon als Füllgas ermöglicht.

In einer alternativen Ausgestaltung einer Anwendung vom Typ A bildet der Glaskolben den Reaktionsraum einer Gasentladung. Der Glaskolben kann zusätzlich als Träger von lichtkonvertierenden Schichten fungieren. Derartige Lampen sind beispielsweise Niederdruck-Fluoreszenzlampen sowie Hochdruck-Gasentladungslampen. In beiden Fällen werden flüssig oder gasförmig eingebrachte Stoffe - oftmals Quecksilber (Hg) und/oder Xenon (Xe) und/oder Neon (Ne), durch Bogenentladung zwischen zwei in den Kolben ragenden Elektroden zu stimulierter Emission von Licht, meist im UV- Bereich, angeregt. Bei Niederdrucklampen, beispielsweise bei Backlightlampen, werden die diskreten UV Linien durch Fluoreszenzschichten teilweise in sichtbare konvertiert. Bei Mitteldruck- und Hochdruckentladungslampen werden die Füllgase unter hohen Druck bis 100 bar oder mehr gesetzt. Durch Stosseffekte sowie Bildung von Molekülen, z. B. von Hg entarten die diskreten Linien zu Emissionsbanden mit der Konsequenz, dass quasi weißes Licht abgegeben wird. Hinzu kommen optisch aktive Stoffe, beispielsweise Halogenide der seltenen Erden, insbesondere Dysprosium - Halogenide, oder Alkali- Halogenide welche fehlende spektrale Anteile "auffüllen" und die Farbechtheit erhöhen. Die Abhängigkeit des Weißeindrucks des abgestrahlten Lichtes vom Druck wird in Derra et al. in "UHP-Lampen: Lichtquellen extrem hoher Leuchtdichte für das Projektionsfernsehen", Phys. Bl. 54 (1998) Nr.9 817-820 beschrieben. Der Offenbarungsgehalt dieser Veröffentlichung wird vollumfänglich in den Offenbarungsgehalt der vorliegenden Anmeldung mit aufgenommen.

Bei Anwendungen des Typs B dient der Glaskolben als zweite Umhüllende beispielsweise zur thermischen Kapselung der eigentlichen lichtemittierenden Einheit und/oder zum Bruch-/ Explosionsschutz bzw. zum Schutz von Materialien und dem Lampenanwender vor schädlichen Strahlen, insbesondere vor UV-. Strahlen.

Anwendungen des Typs B betreffen beispielsweise Hochdruckentladungslampen. Die Brenner von Hochdruckentladungslampen, gefertigt aus Kieselglas oder transluzenter Keramik (z.B. $Al_2O_3$, YAG- Keramiken), werden auf möglichst hohen Betriebstemperaturen bis 1000°C bzw. darüber betrieben. Je höher die Betriebstemperaturen sind, desto höher sind der Farbwiedergabeindex und die Wirksamkeit und umso geringer sind Unterschiede der Lichtqualität von Lampe zu Lampe.

Zur thermischen Isolation des Entladungsgefäßes wird um den eigentlichen Reaktionskörper ein zweiter Glas-Hüllkolben gestülpt, wobei der Raum dazwischen meist bzw. im Wesentlichen evakuiert ist. Der Hüllkolben ist zudem mit UV blockenden Komponenten dotiert.

Aufgrund der unterschiedlichen Einsatzgebiete ergeben sich unterschiedliche Anforderungen an die verwendeten Kolbengläser für Gläser bei Typ A- und Typ B-Anwendungen.

Typ A-Anwendungen erfordern thermisch sehr stabile Materialien, beispielsweise Gläser, welche sich unter den Belastungen der räumlich nahen Wolframwendel bzw. den hohen Betriebstemperaturen unter Druck, insbesondere der hohe Druck, der sich bei HID (High intenisty discharge) ergibt, nicht verformen. Die Glaskolben stehen zudem unter Innendruck zwischen 2 und 30 bar bei Halogenlampen bzw. bis ca. 100 bar oder mehr bei HID-Lampen. Die Kolben müssen des Weiteren chemisch sehr inert sein, d. h., sie dürfen mit den Füllstoffen nicht reagieren. Dies bedeutet, dass keine Komponenten aus dem Kolbenmaterial an die Umgebung abgeben werden dürfen, insbesondere keine Alkalien oder OH-Ionen bzw. $H_2O$. Des Weiteren ist es vorteilhaft, wenn die transparenten Materialien dauerhaft hermetisch dicht mit den Zuführungsmetallen verschmolzen werden können. Insbesondere sollen die Kolbenmaterialien mit W oder Mo - Metall oder mit Fe-Ni-Co - Legierungen (z. B. Kovar, Alloy42) verschmolzen werden können. Des Weiteren sollen die derart verschmolzenen Durchführungen auch gegenüber Temperaturwechselzyklen stabil sein.

Kalte Lampentypen wie Niederdruck-Lampen werden im Bereich der Durchführungen vergleichsweise gering thermisch belastet. Werden derartige Niederdruck-Lampen aber als "Backlight"-Lampenkörper eingesetzt, so ergeben sich besondere Anforderungen an die UV-Blockung.

"Backlight"-Lampen sind Niederdruck-Entladungslampen, die miniaturisiert in TFT ("thin film transistor")-Displays beispielsweise in Bildschirmen, Monitoren, TV-Geräten zur Hintergrundbeleuchtung eingesetzt werden können. Hierfür wurden bisher Multikomponenten-Gläser auf Silicatbasis eingesetzt. Bei Verwendung als "Backlight"-Lampe wird an das Abschirmen von UV-Licht durch das Glas der Lampe selbst hohe Anforderungen gestellt, da andere Komponenten insbesondere solche aus Kunststoff, in den Flachbildschirmen unter dem Einfluss von UV-Strahlung rasch altern und degenerieren.

Bei Typ B-Anwendungen sind die Anforderungen an die Temperaturbelastbarkeit und die chemische Zusammensetzung/Resistenz im Allgemeinen niedriger als bei Typ A-Anwendungen. So herrschen beispielsweise bei einer HID Lampe Außenkolbentemperaturen von 300 °C - 700 °C. abhängig vom Abstand des Hot-Spots des Brenners vom Kolben. Entsprechend ist der Durchführungsbereich deutlich kälter als das dem Brenner direkt benachbarte Kolbenvolumen. Abhängig von der Leistungsabgabe des Brenners und bei sehr kleinen Abständen des Hotspots von der Kolbeninnenwand können auch durchaus Wandtemperaturen bis 800°C oder darüber vorherrschen. Wie oben beschrieben sollten diese Kolben eine hohe UV Blockung, insbesondere bei "Backlight"-Anwendungen, aufweisen.

Als Materialien für Glaskolben bei Anwendungen vom Typ A werden im Stand der Technik Weichgläser für Glühbirnen, alkalifreies Hartglas für Automobil-Halogenlampen bzw. Kieselglas für Halogenlampen oder HID - Lampen für die Allgemeinbeleuchtung bzw. die Studiobeleuchtung verwendet. Diesbezüglich wird auf Heinz G. Pfaender: SCHOTT Glaslexikon, mvg-Verlag, Seiten 122-128 verwiesen oder auch die Patente DE 197 47 355 C1, DE 197 58 481 C1, DE 197 47 354 C1 deren Offenbarungsgehalt vollumfänglich in die vorliegende Anmeldung mit aufgenommen wird.

Für Höchstleistungsentladungslampen findet alternativ zu Kieselglas im Stand der Technik auch transluzentes Aluminiumoxid Verwendung, welches bis 1100°C oder darüber belastbar ist. Betreffend Höchstleistungsentladungslampen wird beispielsweise auf die EP 748 780 B1 oder Krell et al: Transparent sintered corundum with high hardness and strength in J. Am. Ceram. Soc. 86(4) 546-553 (2003) verwiesen, deren Offenbarungsgehalt voll umfänglich in die vorliegende Anmeldung mit aufgenommen wird.

In kalten Niederdrucklampen kann als Glaskolbenmaterial vergleichsweise weiches Glas, beispielsweise Borosilicatglas, verwendet werden.

Als Materialien der Glaskolben für Typ B-Anwendungen kommt derzeit überwiegend Kieselglas bzw. Multikomponentengläser z. B. des Typs Suprax (z. B. SCHOTT Typ 8655 bzw. DURAN-Glas der Fa. SCHOTT GLAS Mainz) zum Einsatz.

Die Verwendung speziell von Glaskeramiken im Lampenbau ist beispielsweise in GB 1,139,622 beschrieben. Hier wird eine Komposit-Lampe beschrieben, bestehend aus einem Glaskeramikteil sowie einem Kieselglas-Fenster. Die Teile sind mit einem Cu-haltigen Lotglas miteinander verbunden. In der GB 1,139,622 werden keine Angaben gemacht zur Herstellung von Grünglaskolben oder - Körper bzw. deren Weiterprozessierung. Die Anwendung ist auf UV- und IR-Beleuchtungen beschränkt.

Bei einigen aus dem Stand der Technik bekannten Lampentypen, so z. B. Halogenlampen oder HID-Lampen, besteht der innere und/oder äußere Lampenkolben aus Kieselglas. Die Durchführung besteht von außen nach innen gesehen aus W- bzw. Mo-Draht, welcher an eine Mo-Folie mit einer Dicke < 100 $\mu$m geschweißt ist sowie einem weiteren Schweißpunkt zu einem W-Draht, der ins Innere der Lampe, z. B. zum W-Filament oder zu W-Entladungselektroden führt.

Es ist allgemein bekannt, zylindrische HID-Lampen durch Verschmelzung des Außenkolbens mit den Kontaktdrähten herzustellen. Der Nachteil einer derartigen Ausführung besteht u.a. in der Größe der erforderlichen Schmelzzone. Zur Steigerung der Kompaktheit und/oder Designfreiheit von Leuchten mit HID Lampen als Lichtquelle wird zur Verkleinerung der Verschmelzzone der Außenkolben an eine die Durchführungsdrähte beinhaltende Basisplatte über einen Lotring gefügt. Eine derartige Ausführung ist aus der Druckschrift WO 2004/077490 A1 vorbekannt. Eine scheibenförmig ausgestaltete Basisplatte aus Glas, Keramik oder Glaskeramik wird über einen Lotring mit einem Hohlkörper in Form eines Kolbens aus Quarzglas, Softglas oder Hartglas zusammengefügt. Der Fügebereich ist durch die zur Basisplatte weisende Stirnseite am Außenkolben und deren Breite charakterisiert und verläuft daher ringförmig. Ebenso ringförmig ist die Fügefläche eines Reflektors, welcher (anstelle des Kolbens) zur Herstellung einer Reflektorlampe (anstelle einer Kolbenlampe) verwendet werden kann.

Die aus dem Stand der Technik bekannten Ausführungen für Leuchtvorrichtungen sind entweder durch einen hohen fertigungstechnischen Aufwand sowie erforderlichen hohen Energieeintrag charakterisiert und/oder weisen eine hohe Baugröße auf.

Es ist Aufgabe der Erfindung, die Nachteile des Standes der Technik zu überwinden. Insbesondere sollen Verfahren angegeben werden, mit denen Leuchtvorrichtungen hergestellt werden können, die sich durch eine hohe Kompaktheit auszeichnen. Im Besonderen soll die Verfahrensführung so erfolgen, dass die die Lampe bzw. den Lampenkolben bildenden Komponenten weitgehend hermetisch dicht miteinander verbunden sind.

Die erfindungsgemäße Lösung ist durch die Merkmale der unabhängigen Ansprüche 1, 38 und 41 charakterisiert. Vorteilhafte Ausgestaltungen sind in den Unteransprüchen wiedergegeben.

Erfindungsgemäß ist der Verbund zwischen zwei miteinander zu verbindenden Komponenten, wobei wenigstens eine der beiden wenigstens teilweise, vorzugsweise vollständig aus Glas oder Glaskeramik, d.h. aus einem glasbasierenden Material besteht, grundsätzlich durch nachfolgend beschriebene Möglichkeiten für sich allein erzeugbar:

1) durch Stoffschluss unter Verwendung eines anorganischen glasbasierenden Lotmaterials oder

2) durch Verschlussmechanismen frei von Lotmaterial unter Ausnutzung von Zug- und/oder Druckspannungszuständen zumindest im Hochtemperaturbereich

Gemäß einer besonders vorteilhaften Ausführung werden beide Möglichkeiten miteinander kombiniert, wobei in diesem Fall ein Lotmaterial eingesetzt wird.

Unter Hochtemperaturbereich werden Temperaturen im Bereich über Raumtemperatur, d.h. ca. > 50°C bis Betriebstemperatur der Lampe verstanden. Im Falle von HID - Lampen sind dies max. ca. 800°C. Der Tieftemperaturbereich ist durch Temperaturen $\leq$ Raumtemperatur charakterisiert.

Der erste Lösungsansatz ist durch die Verwendung eines anorganischen, glasbasierenden Lotmaterials charakterisiert. Als Lotmaterialien können herkömmliche Pb-Borat Compositgläser mit entsprechenden ausdehnungssenkenden inerten Füllstoffen verwendet werden. Auch ausdehnungsangepasste bleifreifreie Bi-Zn-Borat Compositgläser lassen sich verwenden.

Der Verbund der einzelnen miteinander zu fügenden Komponenten, wobei wenigstens eine der beiden wenigstens partiell, vorzugsweise vollständig aus Glas oder Glaskeramik bzw. einem glasbasierenden Material besteht, erfolgt durch Stoffschluss. Dieser ist dadurch charakterisiert, dass dieser hermetisch dicht und bis zu Temperaturen von T $\geq$ 350°C, vorzugsweise T $\geq$ 450°C auch temperatur-, bevorzugt temperaturwechselstabil ist.

Der Verlötvorgang erfolgt durch Vereinigung der zu fügenden Komponenten durch Diffusionsvorgänge zwischen Lotmaterial und den zu fügenden Komponenten. Die Schmelztemperatur der verwendeten Lotmaterialien liegt dabei unterhalb der der zu fügenden Komponenten, vorzugsweise im Bereich von 200°C bis 700°C. Im Falle des Fügens eines Kolbens/Reflektors an Fe-Ni-Legierungen (KOVAR, ALLOY42) sollte diese nicht höher als 600°C, idealerweise nicht höher als 500°C liegen.

Der Verlötungsvorgang kann durch nachfolgend genannte Verfahren realisiert werden:

a) thermisch, z.B. durch Heizstrahler
b) durch kurzwellige Infrarotstrahlung (kIR)
c) durch Laserverschmelzung
d) durch Hochfrequenzheizung

Die Ausführung gemäß b) beinhaltet das Verschmelzen auf optischem Wege. Optische Heizelemente haben den Vorteil in sehr kurzer Zeit und lokal Glasposten zu verschmelzen, wobei die Erhitzung nicht über Oberflächenerhitzung und Wärmetransport über das Material selbst erfolgt, sondern dieses direkt im Volumen erhitzt wird. Dadurch werden insbesondere bei dickeren Proben, thermisch induzierte Spannungen im Glasposten vermieden.

Der Stand der Technik zur Anwendung von kIR - Strahlung ist in einer Reihe von Schriften beschrieben. Die DE 199 38 807 beschreibt die Anwendung von kIR-Strahlung zur Formung von Glasteilen aus einem Glasposten, jedoch bevorzugt dargestellt an flachen Glasplatten. DE 199 38 808, DE 199 38 811 sowie DE 101 18 260 beschreiben die Anwendung von kIR -Strahlung zum Erwärmen von semitransparenten Glaskeramik-Ausgangsgläsern, jedoch ohne Bezug auf Verbindungen zwischen Lotmaterial und Anschlusskomponenten.

Die Form des Lotmaterials im Ausgangszustand wird dabei vorzugsweise an die Form der miteinander zu verbindenden Komponenten im Fügebereich, insbesondere die Fügeflächen angepasst. In Abhängigkeit der Ausführung des Lotmaterials im Ausgangszustand ist es daher möglich, örtlich sehr begrenzte Fügezonen und damit Aufschmelzungsbereiche zu erhalten.

Gemäß einer besonders vorteilhaften Ausführung wird der Stoffschluss mittels Verlöten von Komponenten zur Bildung eines Lampenkolbens eingesetzt. Dieser umfasst eine erste Komponente in Form eines Hohlkörpers und eine zweite Komponente in Form eines scheibenförmigen Elementes. Der Hohlkörper ist zumindest einseitig offen. Die Öffnung wird mittels des scheibenförmigen Elementes verschlossen. Das scheibenförmige Element wird dazu mit dem Hohlkörper über das Lotmaterial verbunden, wobei die Verbindung hermetisch dicht sein sollte. Das scheibenförmige Element kann dabei Träger für Durchführungen, insbesondere Metalldurchführungen sein. Der Hohlkörper weist an seiner die Öffnung tragenden Seite eine, diese umschließende Fläche auf, welche an die andere Komponente unter Zwischenfügen des Lotmaterials durch Stoffschluss gekoppelt wird. Das Lotmaterial im Ausgangszustand ist dann durch eine Ringform charakterisiert.

Die erfindungsgemäße Lösung gemäß dem zweiten Lösungsansatz ist durch eine Ausführung der Verbindung mit intelligenten Verschlussmechanismen frei von Lotmaterial, vorzugsweise unter Ausnutzung von Druck-/Zugspannungszuständen zwischen den ineinander greifenden Komponenten charakterisiert. Diese Spannungen werden durch die Wahl der Ausdehnungskoeffizienten der einzelnen miteinander zu verbindenden Komponenten, deren Geometrie und Dimensionierung sowie deren relative Anordnung zueinander im Verbindungsbereich bestimmt. Alternativ oder zusätzlich können auch einfach nur Unterdruckbedingungen zur Bildung eines formschlüssigen hermetisch dichten Verbundes ohne Lot führen. Unterdruck kann z.B. realisiert werden durch Evakuieren eines Hohlraumes geformt durch ein scheibenförmige Element, insbesondere Platte und zumindest mit einer Öffnung versehener Hohlkörper in Form eines Kolbens / Reflektors. Die Evakuierung kann z.B. erfolgen über ein in der Platte integriertes Pumprohr, z.B. aus Metall, welches anschließend, z.B. durch Lasererhitzung, verschmolzen wird.

Vorraussetzung für eine Verbindung frei von Lotmaterial durch Formschluss unter Ausnutzung von Zug-/Druckspannungszuständen ist die hohe Maßgenauigkeit der Ausgangskomponenten vor dem eigentlichen Fügevorgang, insbesondere im Hinblick auf die Planparallelität der beiden miteinander zu verbindenden Komponenten im Fügebereich. Dies erfordert Passgenauigkeiten im Hinblick auf

- Parallelität
- Neigung
- Koaxialität
- Ebenheit
- Rundheit
- Profilform
- Oberflächenrauhigkeit

im Bereich von Mikrometern bzw. Bruchteilen davon.

Gemäß einer vorteilhaften Weiterentwicklung ist zusätzlich zum Formschluss auch ein Stoffschluss vorgesehen, welcher durch die Verwendung eines Lotmaterials zwischen den zu fügenden Komponenten erzeugt wird.

Je nach Ausführungsform der Verbindung sowie Ausführung, Dimensionierung der miteinander zu verbindenden Komponenten lassen sich Komponenten aus gleichen oder unterscheidlichen Materialien in verschiedenen Kombinationen miteinander in Verbindung bringen. Die Verwendung erfolgt unabhängig von der Art der Verbindung frei von Lotmaterial oder mit Lotmaterial. Die möglichen verwendbaren Materialien für die miteinander zu verbindenden Komponenten werden vorzugsweise hinsichtlich ihres thermischen Ausdehnungskoeffizienten CTE in ppm/K in nachfolgende Ausdehnungsgruppen, die nach Typen bezeichnet sind, klassifiziert, wobei Komponenten gleichen oder unterschiedlichen Typs unabhängig von der Verwendung eines Lotmaterials kombiniert werden können:

| | | |
|---|---|---|
| a) | Typ 1: | Nulldehnende bzw. niedrigdehnende Materialien $0 \leq CTE_{20/300} \leq 1,3$ ppm/K |
| b) | Typ 1 Gr: | Gradientenwerkstoffe |
| | | $0 \leq CTE_{20/300} \leq 5$ ppm/K wobei die spätere Wirkfläche niedrigdehnend, z.B. nulldehnend ist |
| c) | Typ 2: | Materialien mit Dehnungen im Bereich von $CTE_{20/300}$ einschließlich 1,3 bis einschließlich 3,5 ppm/K |
| d) | Typ 3: | Materialien mit Dehnungen im Bereich von $CTE_{20/300}$ einschließlich 3,5 bis einschließlich 5,5 ppm/K |
| e) | Typ 3Gr: | Gradientenwerkstoffe |
| | | $5 \geq CTE_{20/300} \geq 0$ ppm/K wobei die spätere Wirkfläche hochdehnend ist, z.B. $CTE_{20/300} \sim 4,0$ ppm/K |
| f) | Typ 4: | Materialien mit Dehnung im Bereich von $CTE_{20/300}$ einschließlich 5,5 bis einschließlich 9 ppm/K |

Materialien mit einem thermischen Ausdehnungskoeffizienten von CTE~0 ppm/K sind z.B. transparente Lithiumaluminosilikat (LAS)-Glaskeramiken mit der Hauptkristallphase Hochquarzmischkristall, wie ROBAX® oder Zerodur® (Marke von Schott Glas Mainz).

Ein Beispiel für ein Material mit einem CTE~0,5 ppm/K ist Kieselglas $SiO_2$.

Materialien mit einem Ausdehnungskoeffizienten CTE~1,0 ppm/K sind z.B. transluzente Lithiumaluminosilikat (LAS)-Glaskeramiken mit der Hauptkristallphase Keatit-Mischkristall.

Partiell, d.h. lokal keramisierte Lithiumalumosilikate (LAS)-Glaskeramik mit einem Grünglasbereich, insbesondere eine scheibenförmige partiell, d.h. lokal keramisierte Lithiumalumosilikate (LAS)-Glaskeramik mit einer ringförmigen äußeren Verbundkontaktfläche aus Glaskeramik und einem radial nach innen laufenden Grünglasbereich, können als Gradientenwerkstoff des Typs 1 Gr verwendet werden. Dieses Material weist dabei eine Zusammensetzung aus dem folgenden Zusammensetzungsbereich (in Gew.-% auf Oxidbasis) auf:

| | |
|---|---|
| $SiO_2$ | 50 - 70 |
| $Al_2O_3$ | 17 - 27 |
| $Li_2O$ > | 0 - 5 |
| $Na_2O$ | 0 - 5 |
| $K_2O$ | 0 - 5 |
| MgO | 0 - 5 |
| ZnO | 0 - 5 |
| $TiO_2$ | 0 - 5 |
| $ZrO_2$ | 0 - 5 |
| $Ta_2O_5$ | 0 - 8 |
| BaO | 0 - 5 |
| SrO | 0 - 5 |
| $P_2O_5$ | 0 - 10 |
| $Fe_2O_3$ | 0 - 5 |
| $CeO_2$ | 0 - 5 |
| $Bi_2O_3$ | 0 - 3 |
| $WO_3$ | 0 - 3 |
| $MoO_3$ | 0 - 3 |

sowie übliche Läutermittel mit einem Anteil von 0-4 Gew-%.

Als Materialien des Typs 2, d.h. mit einem CTE zwischen einschließlich 1, 3 und einschließlich 3,5 ppm/K können Übergangsgläser der Typen 8228, 8229, 8230 der Anmelderin (SCHOTT) verwendet werden (vgl. DE 103 48 466)

| Oxide in(%) | 8228 | 8229 | 8230 |
|---|---|---|---|
| $SiO_2$ | 82,1 | 87,0 | 83,6 |
| $B_2O_3$ | 12,3 | 11,6 | 11,0 |
| $Al_2O_3$ | 5,3 | - | 2,5 |
| $Na_2O$ | - | 1,4 | 2,2 |
| $K_2O$ | - | - | 0,3 |
| Läuterm. | 0,05-0,2 | 0,05-0,2 | 0,05-0,2 |
| $\alpha(\times 10^{-6})$ | 1,3 | 2,0 | 2,7 |

Auch DURAN 8330 (CTE=3,3 ppm/K) der ungefähren Zusammensetzung $SiO_2$ 81 Gew.%, $B_2O_3$ 12,8 Gew.%, $Al_2O_3$ 2,4 Gew.%, $Na_2O$ 3,3 Gew.% , $K_2O$ 0,5 Gew.% kann verwendet werden.

Die Gläser 8228, 8229, 8230 und 8330 umfassen somit einen Glaszusammensetzungsbereich [Gew. %] von etwa 80 % bis etwa 90 % Si02, etwa 0 % bis etwa 10 % Al2O3, etwa 0 % bis etwa 15 % B2O3 und weniger als etwa 5 %R2O, wobei der Anteil von Al2O3 und B2O3 zusammen etwa 7 % bis etwa 20 % beträgt und R für ein Alkalimetall der Gruppe bestehend aus Li, Na, K, Rb und Cs steht.

Als mögliche Beispiele für Materialien mit Dehnungen im Bereich von $CTE_{20/300}$ = 3,5 bis 5,5 ppm/K (Typ 3) können nachfolgend genannte Materialien zum Einsatz gelangen:

a) Eisen-Nickel-Kobalt-Legierungen (Fe-Ni-Co-Alloys), beispielsweise Legierungen wie Vacon 11® der CRS Holdings Inc., die auch als "Kovar" bezeichnet wird oder ALLOY 42 Für Fe-Ni-Co Legierungen sind, je nach Zusammensetzung der Legierung (z. B. KOVAR, Alloy 42) Ausdehnungskoeffizienten zwischen 3,5 ppm/K und 5,5 ppm/K besonders bevorzugt.

b) Molybdän-Metalle oder dotiertes Molybdän mit einem Ausdehnungskoeffizienten CTE von ca. 5,2 ppm/K
c) Wolfram oder dotiertes Wolfram mit CTE von ca. 4,4 ppm/K
d) Hartglas, z.B. solches der SCHOTT Bezeichnung 8253 mit ungefährer Zusammensetzung in Gew. %:

| Beispiel A1 | |
|---|---|
| SiO2 | 59,79 |
| Al2O3 | 16,52 |
| B2O3 | 0,30 |
| CaO | 13,52 |
| BaO | 7,86 |
| ZrO2 | 1,00 |
| TiO2 | 1,00 |
| Alpha 20/300 | 4,73 ppm/K |
| Tg | 791 °C |
| Dichte | 2,66 g/cm3 |

e) Borosilikatglas, beispielsweise SUPRAX 8488 mit $CTE_{20/300}$ ~ 4,3 ppm/K oder 8250 mit $CTE_{20/300}$ ~ 5,0 ppm/K
f) Ausgangsglas von Lithiumaluminosilikat (LAS)-Glaskeramik Typ ROBAX® oder Zerodur® (nicht keramisiert) mit CTE~ 3,5 - 5,0 ppm /K
g) Magnesiumalumosilikate (MAS)-Glaskeramiken mit einer Zusammensetzung aus dem folgenden Zusammensetzungsbereich (in Gew.-% auf Oxidbasis):

$SiO_2$    35 - 70, insbesondere 35 - 60

$Al_2O_3$    14 - 40, insbesondere 16,5 - 40

MgO    0 - 20, bevorzugt 4 - 20, insbesondere 6 - 20

ZnO    0-15, bevorzugt 0 - 9, insbesondere 0 - 4

$TiO_2$    0-10, bevorzugt 1 - 10

$ZrO_2$    0-10, bevorzugt 1 - 10

$Ta_2O_5$    0 - 8, bevorzugt 0 - 2

BaO    0-10, bevorzugt 0 - 8

CaO    0 - < 8, bevorzugt 0 - 5, insbesondere < 0,1

SrO    0 - 5, bevorzugt 0 - 4

$B_2O_3$    0-10, bevorzugt > 4 - 10

$P_2O_5$    0-10, bevorzugt < 4

$Fe_2O_3$    0 - 5

$CeO_2$    0 - 5

$Bi_2O_3$    0 - 3

$WO_3$    0 - 3

$MoO_3$    0 - 3

sowie übliche Läutermittel z.B. $SnO_2$, $CeO_2$, $SO_4$, Cl, $As_2O_3$ $Sb_2O_3$ in Mengen von 0-4 Gew.-%.

Materialien des Typs 3Gr beinhalten Gradientenmaterialien mit lokal unterschiedlichen Wärmeausdehnungskoeffizienten $CTE_{20/300}$ zwischen 0 und 4 ppm/K. Derartige Materialien können beispielsweise durch geeignete Prozessführung aus Ausgangsmaterialien erzeugt werden, z.B. aus Ausgangsglas von Glaskeramiken des Typs LAS Das Element kann dabei je nach Ausführung der Komponente beispielsweise als Hohlkörper(rohrförmig, kolbenförmig) oder aber scheibenförmig vorliegen. Eine Ausführung mit einem lokal keramisierten rohrförmigen Element mit endständig grünem Bereich ist aus WO2005/066088 vorbekannt.

Ausführungsbeispiele für Materialien mit einer Dehnung im Bereich $CTE_{20/300}$ zwischen 5,5 und einschließlich 9,0 ppm/K sind (Typ 4):

a) $Al_2O_{3-}$ Keramiken
$6 \le CTE_{20/300} \le 8$ ppm/K
b) Lithiumaluminosilikat-Glaskeramiken mit Hauptkristallphase Lithium-Disilikat
$CTE_{20/300}$ ca. 9,0 ppm/K
c) Copper-Clad Ni-Fe Wire
$CTE_{20/300}$ axial 8,5 ppm/K
d) YAG Keramik
$CTE_{20/300}$ ca. 8 ppm/K

Hermetisch dichte Verbundsysteme können zwischen Komponenten aus Materialien einer Ausdehnungsgruppe als auch Materialien aus unterschiedlichen Ausdehnungsgruppen erzeugt werden.

Die erfindungsgemäße Lösung wird vorzugsweise zur Herstellung von Verbundsystemen aus Komponenten eingesetzt, bei welchen die erste Komponente als Hohlkörper und die zweite Komponente als scheibenförmiges Element ausgeführt ist.

Hohlkörper aus Glas oder Glaskeramiken für den Lampenbau können in Form von Röhren vorliegen. Röhren können, sofern erforderlich, in kugelförmige oder ellipsoide Formen überführt werden. Hohlkugeln oder Hohlellipsoide können, unabhängig von einer vorangegangenen Rohrform, auch direkt durch Blasen und Verpressen hergestellt werden.

Gläser oder Glaskeramiken in rohrförmiger bzw. rohrähnlicher Form können auch als Außenkolben in HID (high intensity discharge) Lampen , z. B. Hochdruck-Metallhalogenid - Entladungslampen, verwendet werden. Unter "rohrförmig" wird in dieser Anmeldung ein Hohlkörper mit einer äußeren Wand und mindestens einer Öffnung verstanden, dessen Querschnitt kreisrund ist, wohingegen "rohrähnlich" entsprechende Querschnitte anderer geschlossener Geometrie, z. B. elliptisch, oval oder verrundet-eckig, bezeichnet. Auch können Gläser und Glaskeramiken in Form von Reflektoren, welche im Bereich des Fußes kreisrunde Strinflächen aufweisen, mit einem anderen Material verbunden werden.

Die erfindungsgemäße Lösung bezieht sich im Wesentlichen auf zwei unterschiedliche Grundkonfigurationen. Zwischen diesen kann, je nach Ausdehnungsregimen der Verbundpartner bzw. der geometrischen Verhältnisse in Lampe bzw. dem System, gewählt werden.

- freie und ungehinderte, d.h. zumindest einseitige Ausdehnung einer der miteinander zu koppelnden Komponenten
- beidseitige Beschränkung der Platznahme

Aufgrund der ständig wechselnden Temperaturzustände, insbesondere bedingt durch die Aktivierung und Deaktivierung von Leuchtvorrichtungen, muss in allen Betriebszuständen ein hermetisch dichter Verbund gewährleistet sein. Ausführungen mit der Möglichkeit zumindest einseitiger freier Platznahme zur Erzeugung von Verbunden aus Hohlkörpern mit Öffnung und scheibenartigen Elementen zum Verschluss der Öffnung sind dabei durch nachfolgende Ausgestaltungsmöglichkeiten im Hinblick auf die Erzeugung eines Formschlusses charakterisiert. Alle Ausführungen sind dabei für eine Ausführung des Hohlkörpers im Verbindungsbereich mit einer bestimmten den Außen- und Innenumfang beschreibenden Geometrie und Ausführung des scheibenförmigen Elementes mit einem vorzugsweise aber nicht zwingend (siehe unten) an einer Stirnseite ausgeführten Vorsprung mit Ausbildung eines den Umfang des Vorsprunges beschreibenden Flächenbereiches zur Koppelung an den Hohlkörper bestimmt:

a) Ausbildung des Vorsprunges als

a1) scheibenförmiger Vorsprung
a2) ringförmiger Vorsprung

im Bereich der Mittellinie des scheibenförmigen Elementes mit paralleler oder geneigt zur Innenwandung des Hohlkörpers ausgebildeten Umfangsfläche, wobei die Geometrie des Innenumfanges des Hohlkörpers ähnlich, vorzugsweise unter Berücksichtigung der Passung gleich zu der des Vorsprunges gewählt ist

b) Ausbildung des Vorsprunges als ringförmiger Vorsprung im Bereich des Außenumfanges des scheibenförmigen Elementes mit paralleler oder geneigt zur Außenwandung des Hohlkörpers ausgebildeten Umfangsfläche, wobei die Geometrie des Außenumfanges des Hohlkörpers ähnlich, vorzugsweise unter Berücksichtigung der Passung gleich zu der des Außenumfanges des Vorsprunges gewählt ist

c) Ausbildung einer Nut/Sicke bei Vorsehen zweier Vorsprünge, die die Wirkflächen zur Koppelung mit einer Teilfläche des Außenumfanges und/oder einer Teilfläche des Innenumfanges des Hohlkörpers bilden.

Die genanten Konfigurationen können frei von Lotmaterial oder aber mit Lotmaterial zur Herstellung des Verbundsystems genutzt werden. Sofern kein Formschluss erforderlich/gewünscht ist, sondern der Verbund im Wesentlichen durch Stoffschluss, d.h. über ein Lot erfolgen soll, kann auf eine Konturierung der Platte auch verzichtet werden, d.h. letztere weist dann keinerlei ring-, scheiben- oder nutförmige Strukturen auf.

Ferner werden diese je nach gewünschtem Verbund im Tieftemperaturzustand hinsichtlich der Ausdehnungskoeffizienten aufeinander abgestimmt und derart ausgelegt und dimensioniert, dass zumindest im Hochtemperaturzustand, speziell bei Betriebstemperatur der Lampe, zwischen den einzelnen Wirkflächen der einzelnen Komponenten eine Übergangs- oder Presspassung vorhanden ist. Vorzugsweise liegt diese bereits im Tieftemperaturbereich vor.

Zur Erhöhung der Freiheitsgrade hinsichtlich der Wahl der Materialien der einzelnen miteinander zu koppelnden Komponenten sind diese in ihrer Geometrie derart aufeinander abgestimmt, dass im Tieftemperaturbereich zwischen den im Hochtemperaturbereich formschlüssig miteinander gekoppelten Wirkflächen ein Spalt vorhanden ist. Die Spaltgeometrie wird dabei im Hinblick auf die gewählten Materialien und deren Ausdehnungskoeffizienten bestimmt.

Zur Vermeidung von unerwünschten Spannungszuständen wird die Geometrie der Wirkflächen und/oder der Spalte dahingehend optimiert, dass Scherkräfte zwischen den einzelnen miteinander in Wirkverbindung stehenden Flächen der miteinander zu koppelnden Komponenten weitestgehend vermieden werden.

Dies wird durch entsprechend weiche, d.h. gerundete Ausführungen der Anlageflächen realisiert.

Die erfindungsgemäße Lösung wird nachfolgend anhand von Figuren erläutert. Darin ist im Einzelnen folgendes dargestellt:

| | |
|---|---|
| Figur 1a | verdeutlicht ein erfindungsgemäß ausgeführtes Verbundsystem gemäß einer ersten Ausführung mit Lotring; |
| Figur 1b | verdeutlicht anhand eines Details X gemäß Figur 1a die Zuordnung der einzelnen Komponenten zueinander im Tieftemperaturzustand (Raumtemperatur); |
| Figur 2a | verdeutlicht ein erfindungsgemäß ausgeführtes Verbundsystem gemäß einer ersten Ausführung frei von Lotmaterial; |
| Figur 2b | verdeutlicht anhand eines Details X gemäß Figur 2a die Zuordnung der einzelnen Komponenten zueinander im Tieftemperaturzustand (Raumtemperatur); |
| Figur 3a | verdeutlicht ein erfindungsgemäß ausgeführtes Verbundsystem gemäß einer zweiten Ausführung mit Lotring und radialem Spalt; |
| Figur 3b | verdeutlicht anhand eines Details X gemäß Figur 3a die Zuordnung der einzelnen Komponenten zueinander im Tieftemperaturzustand (Raumtemperatur); |
| Figur 4a | verdeutlicht ein erfindungsgemäß ausgeführtes Verbundsystem gemäß einer zweiten Ausführung gemäß Figur 3 frei von Lotmaterial; |
| Figur 4b | verdeutlicht anhand eines Details X gemäß Figur 4a die Zuordnung der einzelnen Komponenten zueinander im Tieftemperaturzustand (Raumtemperatur); |
| Figur 5a | verdeutlicht ein erfindungsgemäß ausgeführtes Verbundsystem gemäß einer zweiten Ausführung gemäß Figur 4 mit optimierter Spaltgeometrie; |
| Figur 5b | verdeutlicht anhand eines Details X gemäß Figur 5a die Zuordnung der einzelnen Komponenten zueinander im Tieftemperaturzustand (Raumtemperatur); |
| Figur 5c | verdeutlicht anhand einer Ansicht gemäß Figur 5b die Lagezuordnung der Komponenten im Hochtemperaturzustand; |
| Figur 6a | verdeutlicht ein erfindungsgemäß ausgeführtes Verbundsystem mit Lotmaterial gemäß einer dritten Ausführung; |
| Figur 6b | verdeutlicht anhand eines Details X gemäß Figur 6a die Zuordnung der einzelnen Komponenten zueinander im Tieftemperaturzustand (Raumtemperatur); |
| Figur 7a | verdeutlicht ein erfindungsgemäß ausgeführtes Verbundsystem gemäß einer dritten Ausführung frei von Lotmaterial; |

Figur 7b    verdeutlicht anhand eines Details X gemäß Figur 7a die Zuordnung der einzelnen Komponenten zueinander im Tieftemperaturzustand (Raumtemperatur);

Figur 8a    verdeutlicht ein erfindungsgemäß ausgeführtes Verbundsystem gemäß einer vierten Ausführung mit Lotmaterial;

Figur 8b    verdeutlicht anhand eines Details X gemäß Figur 8a die Zuordnung der einzelnen Komponenten zueinander im Tieftemperaturzustand (Raumtemperatur);

Figur 9a    verdeutlicht ein erfindungsgemäß ausgeführtes Verbundsystem gemäß einer vierten Ausführung mit Lotmaterial und optimierter Spaltgeometrie;

Figur 9b    verdeutlicht anhand eines Details X gemäß Figur 9a die Zuordnung der einzelnen Komponenten zueinander im Tieftemperaturzustand (Raumtemperatur);

Figur 10a    verdeutlicht ein erfindungsgemäß ausgeführtes Verbundsystem gemäß einer fünften Ausführung;

Figur 10b    verdeutlicht anhand eines Details X gemäß Figur 10a die Zuordnung der einzelnen Komponenten zueinander im Tieftemperaturzustand (Raumtemperatur).

Figur 11a    verdeutlicht ein erfindungsgemäß ausgeführtes Verbundsystem gemäß einer sechsten Ausführung mit gegenüber Abb. 10 vergrößerten Wirkflächen

Figur 11b    verdeutlicht anhand eines Details X gemäß Figur 11a die Zuordnung der einzelnen Komponenten zueinander im Tieftemperaturzustand (Raumtemperatur).

Figur 12a    verdeutlicht ein erfindungsgemäß ausgeführtes Verbundsystem gemäß einer besonders weitergebildeten siebten Ausführung mit optimierter Lotmaterialeinbringung;

Figur 12b    verdeutlicht anhand eines Details X gemäß Figur 12a die Zuordnung der einzelnen Komponenten zueinander im Tieftemperaturzustand (Raumtemperatur).

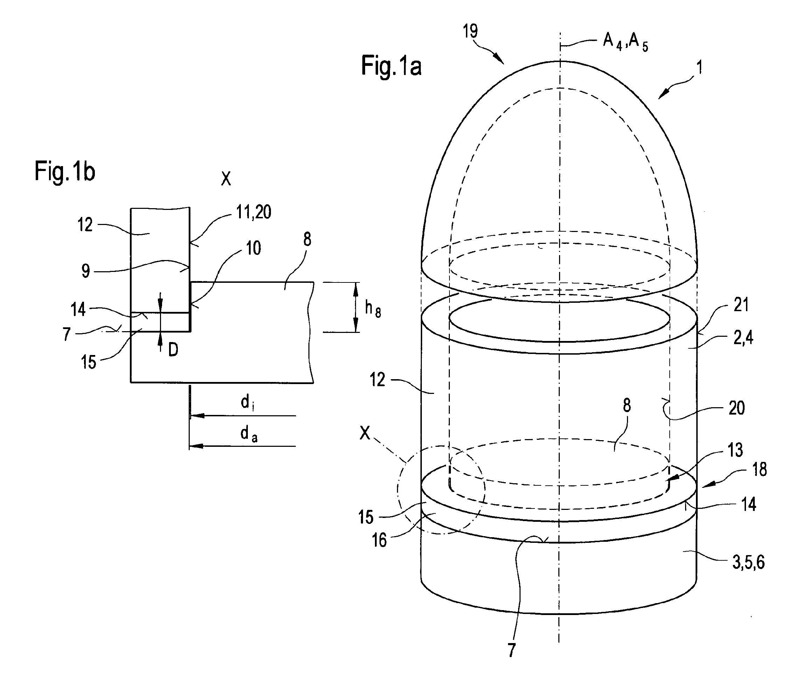

Die Figuren 1a bis 12a verdeutlichen in schematisiert vereinfachter Darstellung Verbundsysteme 1 und die Figuren 1b bis 12b die Anordnung der einzelnen miteinander zu verbindenden Komponenten, eine erste Komponente 2 und eine zweite Komponente 3 zueinander anhand eines Ausschnittes in Schnittdarstellung im Tieftemperaturzustand, d.h. bei Raumtemperatur. Die Komponente 2 ist als Hohlkörper 4 ausgeführt und die Komponente 3 als scheibenförmiges Element 5 in Form einer Basisplatte 6. Wenigstens eine der Komponenten besteht (wenigstens teilweise) aus Glas oder Glaskeramik.

Das Verbundsystem 1 findet vorzugsweise Anwendung in Lampen bzw. Leuchten, wobei der Hohlkörper 4 einen Kolben bildet und die Basisplatte 6 den Boden mit Durchführung für Elektroden.

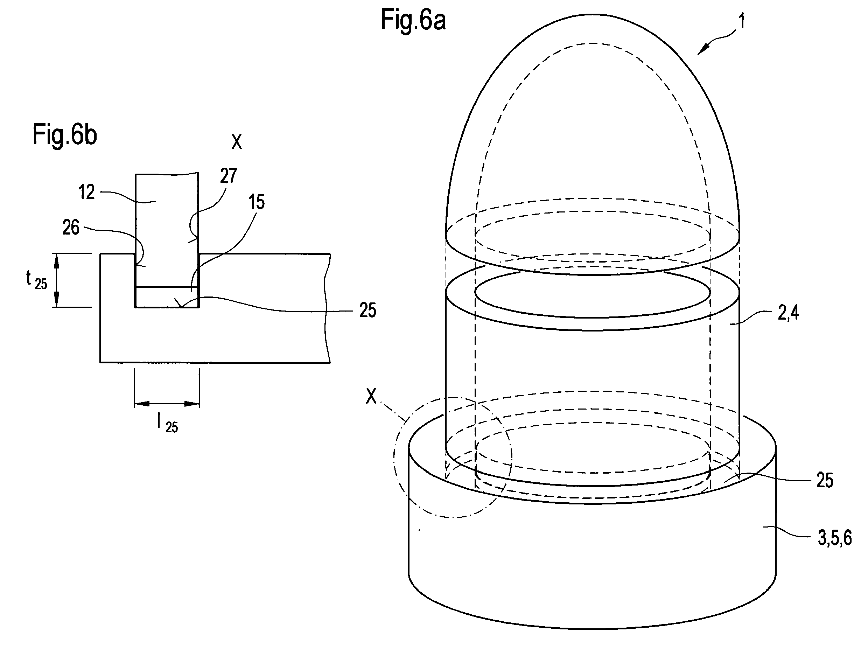

Die Verbundsysteme gemäß der Figuren 1 bis 5 sind dabei durch eine geometrische Ausführung der einzelnen miteinander zu verbindenden Komponenten charakterisiert, welche einseitig keine Beschränkung des Hohlkörpers 4 zur Platznahme aufweisen, während die Ausführungen gemäß der Figuren 6 bis 12 durch eine beidseitige Fixierung charakterisiert sind.

Figur 1 verdeutlicht eine erste Ausführung eines erfindungsgemäß ausgeführten Verbundsystems 1 aus einem scheibenförmigen Element 5 und einem Hohlkörper 4. Figur 1a verdeutlicht das Verbundsystem 1, Figur 1b verdeutlicht einen Ausschnitt in einem Axialschnitt aus Figur 1a. Der Hohlkörper 4 ist bezüglich einer Achse A4 vorzugsweise rotationssymmetrisch ausgeführt und weist einen ersten hohlzylindrischen Teilbereich auf, der an seinem ersten Endbereich 18 offen ausgeführt ist und am anderen Endbereich 19 geschlossen, wobei der Verschluss über einen mit dem ersten Teilbereich einteilig ausgeführten zweiten kuppel- oder ellipsoidförmig ausgeführten Teilbereich erfolgt. Der so gebildete Hohlkörper 4 ist durch eine Innenfläche 20, eine Außenfläche 21 sowie eine Stirnfläche 14 charakterisiert. Der Verbund zwischen den Komponenten 2 und 3 gemäß Figur 1 wird durch Formschluss und Stoffschluss erzielt. Das scheibenförmige Element 5 weist dazu an seiner im verbunden Zustand zum Hohlkörper 4 weisenden Stirnseite 7 einen Vorsprung 8 auf, der der formschlüssigen Verbindung zwischen Hohlkörper 4 und scheibenförmigen Element 5 dient. Der Formschluss wird durch das Zusammenwirken von Wirkflächen 9 am Vorsprung 8 und 10 am Innenumfang 11 der Innenfläche 20 der Wand 12 des Hohlkörpers 4 im Verbindungsbereich erzeugt.

Der Vorsprung 8 kann verschiedenartig ausgeführt sein. Dieser weist jedoch eine zum Innenumfang 11 der Wand 12 des Hohlkörpers 4 gerichtete und vorzugsweise parallel zu dieser ausgeführte Wirkfläche 9 auf. Dies bedeutet, dass die Geometrie des Vorsprunges 8 und des die Wirkfläche 10 bildenden Bereiches der Wand 12 des Hohlkörpers 4 hinsichtlich der Passungen aufeinander abzustimmen sind. Im dargestellten Fall ist der Hohlkörper 4 durch eine zumindest im Anschlussbereich an die Basisplatte 6 rotationssymmetrische Ausführung charakterisiert. Die Wirkfläche 10 als Teilfläche der Innenfläche 20 des Hohlkörpers 4 ist daher ringförmig. Die dazu komplementäre Wirkfläche 9 am Vorsprung 8 ist ebenfalls ringförmig und in einem Winkel, vorzugsweise senkrecht zur Stirnfläche 7 angeordnet. Diese ringförmige Fläche in Form der Wirkfläche 9 wird dabei von der Seitenfläche eines je nach Ausgestaltung ringförmigen oder hier dargestellt scheibenförmigen Vorsprunges 8 gebildet. Die Abmessungen des Vorsprunges 8 in Umfangsrichtung, bei rotationssymmetrischer Ausführung gemäß einer Achse A5, welche im gefügten Zustand der Komponenten 2, 3 mit der Achse A4 des Hohlkörpers 4 zusammenfällt, in radialer Richtung sind kleiner als die der Basisplatte 6. Vorzugsweise sind beide durch einen Durchmesser charakterisiert, der Innenumfang 20 des Hohlkörpers 4 im An-

schlussbereich durch einen Durchmesser $d_i$ und der Außendurchmesser des Vorsprunges 8 durch einen Durchmesser $d_a$. Der zwischen beiden Durchmessern an der Stirnfläche 7 verbleibende Flächenbereich 16 dient je nach Ausführung als direkte Anlagefläche für den Hohlkörper 4, insbesondere die Stirnfläche 14 oder wie in Figur 1 a dargestellt der Kopplung mit der Stirnfläche 14 über einen Lotring 15. Der Flächenbereich 16 und die Strinfläche 14 müssen nicht zwingend gleich groß sein, d.h. der Flächenbereich 16 der Platte kann auch größer sein als die Stirnfläche, d.h. die Außenwand 21 des Hohlkörpers muss nicht zwingend in Flucht mit der Außenkante der Platte liegen (nicht gezeigt). Ein Überstand der Platte ist möglich, ein Überstand des Außenwandung des Hohlkörpers sollte vermieden werden.

Die so ineinander gesteckten Komponenten - Hohlkörper 4 und Basisplatte 6-bilden im Fügebereich, insbesondere in radialer Richtung ein Wirkflächenpaar 13. Ferner ist die zur Basisplatte 6 weisende Stirnfläche 14 des Hohlkörpers über ein Lotmaterial, insbesondere einen Lotring 15 stoffschlüssig mit dem Flächenbereich 16 der Stirnfläche 7 an der Basisplatte 6 verbunden. Das Lotmaterial dient des Weiteren der Auffüllung von Restundichheiten. Die Größe des Fügebereiches wird dabei durch die Abmessungen des Lotringes 15 sowie dem Verhalten des Lotmaterials im fließfähigen Zustand bestimmt. Der Hohlkörper 4 hat aufgrund des nur einseitigen Formschlusses einseitig, d.h. am Außenumfang 21 keine Beschränkung zur Platznahme in radialer Richtung, d.h. von der Wirkfläche 9 am Vorsprung 8 wegweisend. Der Lotring 15 ist hinsichtlich seiner Dimensionierung, insbesondere seines Durchmessers und seiner Breite im Querschnitt betrachtet an die Abmessungen der Stirnfläche 14 des Hohlkörpers 4 angepasst. Die Dicke D im Querschnitt betrachtet ist kleiner als die Höhe h8 des Vorsprunges 8 gegenüber der Stirnfläche 7.

Die einzelnen Komponenten des Verbundsystems 1 sind gemäß Figur 1 durch gleiche oder geringfügig unterschiedliche thermische Ausdehnungskoeffizienten CTE charakterisiert. Dies gilt sowohl für den Hohlkörper 4, das scheibenförmige Element 5 und den Lotring 15, d.h. $CTE_B \sim CTE_H \sim CTE_{Lot}$.

Die einzelnen Komponenten sind derart ausgelegt und dimensioniert, dass die Passung im Fügebereich mit Formschluss, d.h. zwischen Vorsprung 8 und Innenumfang 11 der Wand 12 zumindest als Übergangspassung dimensioniert ist, vorzugsweise bereits im Tieftemperaturzustand, d.h. bei Raumtemperatur eine Presspassung bildet.

Die Stirnfläche 7 und der Flächenbereich 16 sind vorzugsweise eben und in einem Winkel von 90° zur Symmetrieachse A6 der Basisplatte 6 bzw. A4 des Hohlkörpers 4 ausgeführt.

Bei der Ausführung gemäß Figur 1 a, 1 b erfolgt der Formschluss in radialer Richtung bezogen auf die Symmetrieachsen A4, A6 von Hohlkörper 4 und Basisplatte 6, in vertikaler Richtung, d.h. parallel zu den Symmetrieachsen A4, A6 wird der Verbund durch Stoffschluss über ein Lotmaterial in Form eines Lotringes 15 realisiert. Die Aufschmelzzone an den Anschlusskomponenten 2, 3 kann dadurch in Abhängigkeit der Abmessungen des Lotringes 15, insbesondere seiner Breite B gering gehalten werden, da nur ein ringförmiger, d.h. umlaufender Bereich betroffen ist.

Beispielsweise finden nachfolgend genannte entsprechend ihres Ausdehnungskoeffizienten typisierte Materialkombinationen zumindest im Verbindungsbereich für die einzelnen miteinander zu verbindenden Komponenten bei einer Ausführung des Verbundsystems 1 gemäß Figur 1 Anwendung. Die Beispiele zu Figur1 -12 sind dabei stellvertretend für alle anderen genannten Materialien innerhalb einer Dehnungsgruppe zu sehen:

Beispiel 1:

- Ausführung der ersten oder zweiten Komponente aus einem Werkstoff von Typ 1 Gr mit CTE zwischen 4 und 0 ppm/K , wobei sich die Zone mit CTE ~ 4 im Verbindungsbereich der Kompartimente befindet und der damit zu verbindenden Komponente aus einem Material des Typ 3 mit Dehnungen im Bereich von CTE=3,5 bis 5,5 ppm/K

Beispiel 2:

- Ausführung beider Komponenten aus einem Material Typ 3 mit Dehnungen im Bereich von $CTE_{20/300}$= 3,5 bis 5,5 ppm/K

Materialbeispiele für die einzelnen Komponenten 2, 3 der Verbindungen sind:

a) (zu Bsp. 1) erste oder zweite Komponente, bevorzugt Komponente 2 aus partiell keramisierter LAS-Glaskeramik
zweite oder erste Komponente, bevorzugt Komponente 3 aus Alloy 42 oder KOVAR
b) (zu Bsp. 2) erste oder zweite Komponente, bevorzugt Komponente 2 aus MAS-Glaskeramik
zweite oder erste Komponente, bevorzugt Komponente 3 aus KOVAR oder Alloy42
c) (zu Bsp. 2) erste oder zweite Komponente, bevorzugt Komponente 2 aus Hartglas
zweite oder erste Komponente, bevorzugt Komponente 3 aus KOVAR oder Allyo42
d) (zu Bsp. 2) erste oder zweite Komponente, bevorzugt Komponente 2 aus Borosilikatglas, z.B. Schott-Bezeichnung Typ 8488
zweite oder erste Komponente, bevorzugt Komponente 3 aus Alloy 42 oder Kovar

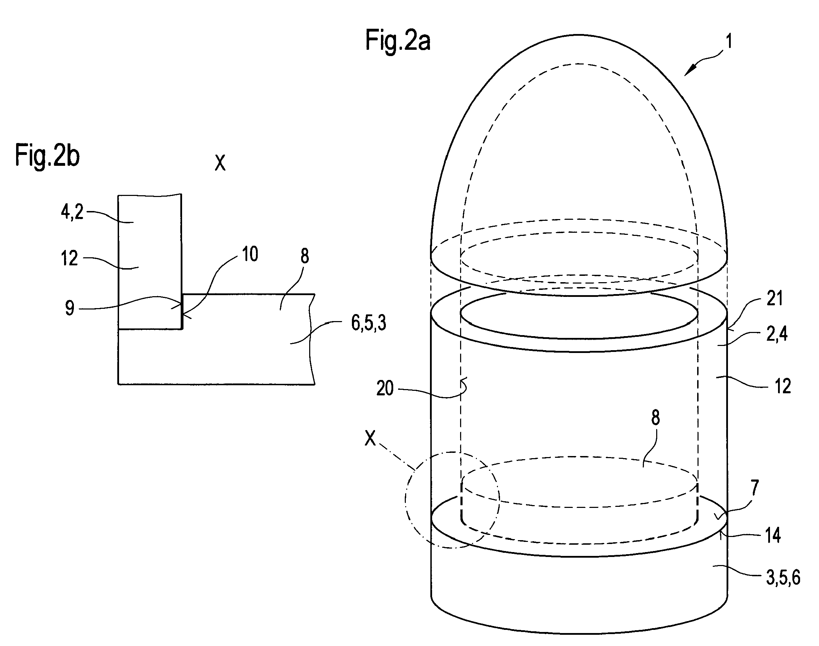

Demgegenüber verdeutlicht Figur 2 eine Ausführung gemäß Figur 1 frei von einem Lotmaterial. In diesem Fall wird der Verbund der einzelnen Komponenten 2, 3 allein durch Formschluss aufgrund der Ausnutzung der während der Erwärmung und der Abkühlung bzw. Abkühlung und Erwärmung bzw. der Evakuierung vorherrschenden Spannungs- bzw. Unterdruckzustände erzeugt. Der Grundaufbau des Verbundsystems 1, insbesondere der Einzelkomponenten 2, 3 entspricht dem in Figur 1 beschriebenen, wobei zwischen der Stirnfläche 14 des Hohlkörpers 4 und der Stirnfläche 7 an der Basisplatte 6 kein Lotmaterial vorgesehen ist. Der Verbund erfolgt allein durch Formschluss. Voraussetzung dafür ist die Verwendung von Materialien mit annähernd gleicher thermischer Wärmeausdehnung zwischen den zu fügenden Komponenten, d. h. $CTE_H \sim CTE_B$.

Beispielsweise finden folgende Materialkombinationen für die einzelnen miteinander zu verbindenden Komponenten zumindest im Verbindungsbereich bei einer Ausführung des Verbundsystems 1 gemäß Figur 2 Anwendung:

Beispiel 1: - Ausführung der ersten und zweiten Komponente aus einem Null- oder niedrigdehnenden Material mit einer thermischen Ausdehnung CTE zwischen 0 und 1,3 ppm/K

Beispiel 2: - Ausführung einer Komponente aus einem Material mit Dehnungen im Bereich von CTE=3,5 bis 5,5 ppm/K und der anderen Komponente aus einem Null- oder niedrigdehnenden Material

Materialbeispiel für die einzelnen Komponenten 2, 3 der Verbindungen:

a) erste oder zweite Komponente, bevorzugt Komponente 2, aus Kieselglas zweite oder erste Komponente, bevorzugt Komponente 3 aus transluzenter LAS-Glaskeramik mit der Hauptkristallphase Keatit-Mischkristall

Die optimalen Passungsgrößen sind abhängig vom CTE der Komponenten, der jeweiligen Temperatur und der dann auftretenden E-Moduli und Querkontraktionszahlen der Materialien. Allgemein gilt, dass die Schubspannungen, die auf den Hüllkolben wirken dürfen, auf max. 15 MPa, bevorzugt <10 MPa begrenzt werden sollen. Es gilt annähernd:

$$\text{Spannung } (< 10 \text{ MPa}) = (E(T) \cdot \gamma) / (2 \cdot (1 + \nu(T)))$$

mit:

E(T): E-Modul bei jeweiliger Temperatur
$\sin \gamma = 2 \cdot (\text{Ausgangsgradius der Nut}) \cdot (1+CTE(T))/(\text{Tiefe der Nut})$
$\nu(T)$: Poisson-Zahl bei jeweiliger Temperatur

Daraus lässt sich dann die optimale Tiefe der Nut und deren Radius ermitteln

Werden für die Komponenten 2, 3 Materialien mit gleicher Wärmeausdehnung verwendet, erfolgt aufgrund der Ausdehnung des Vorsprunges 8 der Basisplatte 6 in radialer Richtung und der Ausdehnung des Hohlkörpers 4 der Aufbau einer Druckspannung gegenüber der Innenwandung des Hohlkörpers 4, wobei dieser sich jedoch wiederum in radialer Richtung ausdehnt. Zumindest wird ein hermetisch dichter Verbund im Bereich der Wirkflächen 9, 10 durch Formschluss in radialer Richtung und aufgrund des Verlaufes der Wirkflächen auch in vertikaler Richtung gebildet. Zusätzlich erfolgt ein hermetisch dichtes Anliegen auch zwischen der zur Basisplatte 6 weisenden Stirnfläche 14 und dem ringförmigen Flächenbereich 16.

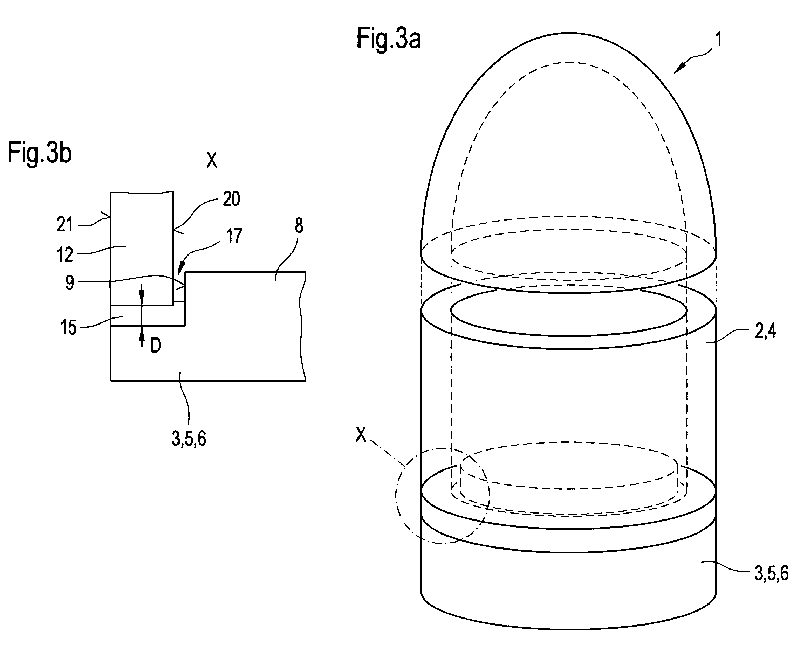

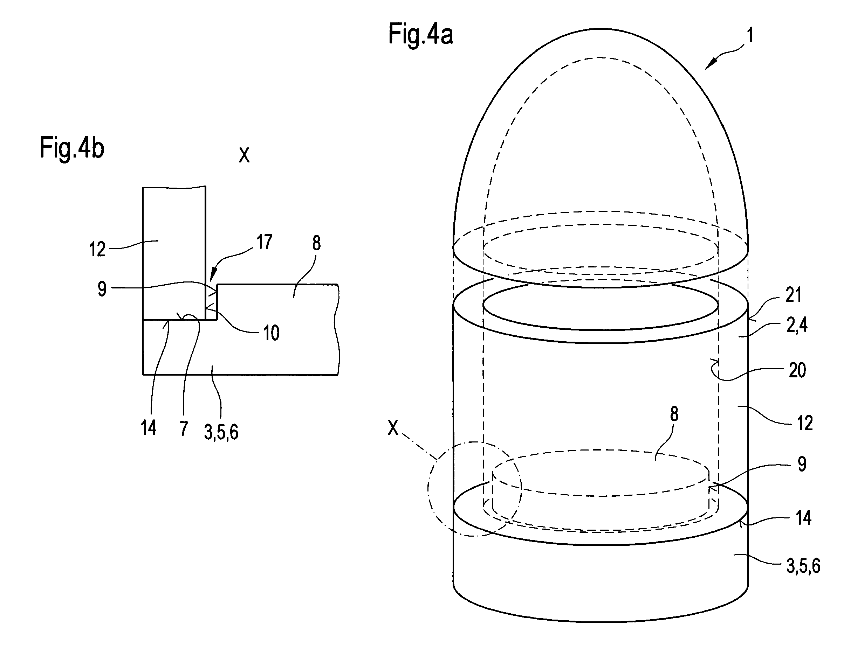

Die Figuren 3 und 4 verdeutlichen jeweils Weiterentwicklungen gemäß der Figuren 1 und 2. Diese sind durch das Vorsehen eines radialen Spaltes 17 zwischen den Wirkflächen 9, 10 der miteinander zu verbindenden Komponenten 2, 3 im Tieftemperaturzustand des Verbundsystem 1, d.h. bei Temperaturen < 50°, vorzugsweise bei Raumtemperatur oder darunter charakterisiert. Die Spaltgröße in radialer Richtung liegt dabei im Bereich von 0, 001 bis 0,2 R mit R = Radius des Hohlkörpers 4.

Figur 3 verdeutlicht eine Weiterentwicklung einer Ausführung gemäß Figur 1 mit Lotring 15 und einem Spalt 17, welcher zumindest im Tieftemperaturzustand vorhanden ist. Der Spalt 17 ist zwischen der Innenwandung 20 des Hohlkörpers 4 und dem Vorsprung 8 der Basisplatte 6 vorgesehen. Dieser verläuft ringförmig um die vom Vorsprung 8 gebildete Wirkfläche 9 und ist zwischen dieser und dem im Hochtemperaturzustand als Wirkfläche 10 fungierenden Flächenbereich am Innenumfang 11 bzw. der Innenfläche 20 am Hohlkörper 4 angeordnet. Der Lotring 15 ist zwischen der zur Basisplatte 6 weisenden Stirnfläche 14 des Hohlkörpers 4 und der Stirnfläche 7 der Basisplatte 6 angeordnet und erstreckt sich ferner in den Spalt 17, d.h. sowohl in radialer Richtung als auch senkrecht dazu. Diese Ausführung erlaubt die Verwendung von Materialien unterschiedlicher Ausdehnungsgruppen für die miteinander zu verbindenden Komponenten 2, 3. Dabei ist der thermische Ausdehnungskoeffizient $CTE_H \leq CTE_B$, wobei das Lotmaterial diese unterschiedlichen Ausdehnungskoeffizienten ausgleicht, indem dieses mit seinem Ausdehnungskoeffizienten bevorzugt dazwischen liegt und/oder aber mit entsprechender Dicke D ausgeführt ist. Durch Anpassung der Verbundtemperatur sind auch Lote möglich, deren Dehnung in einem bestimmten Rahmen oberhalb oder unterhalb jener der Verbundpartner liegen. Der Abstand in den Ausdehnungskoeffizienten sollte vorzugsweise aber 1 ppm/K nicht überschreiten.

Der Verbund der Komponenten 2, 3 erfolgt in allen Betriebszuständen, insbesondere bei nahezu allen Temperaturen zumindest durch Stoffschluss, zusätzlich im Hochtemperaturbereich ist auch Formschluss möglich.

Beispielsweise finden nachfolgend genannte, durch die Zuordnung zu Ausdehnungsgruppen charakterisierte Materialien zumindest im Verbindungsbereich für die einzelnen miteinander zu verbindenden Komponenten bei einer Ausführung des Verbundsystems 1 gemäß Figur 3 Anwendung:

Beispiel 1:

- Ausführung der ersten oder zweiten Komponente aus einem Null- bzw. niedrigdehnendem Material mit $0 \leq CTE \leq 1,3$ ppm/K und Ausführung der zweiten oder ersten Komponente aus einem Material mit Dehnungen im Bereich von CTE einschließlich 3,5 bis einschließlich 5,5 ppm/K

Beispiel 2:

- Ausführung der ersten oder zweiten Komponente aus einem Gradientenwerkstoff mit CTE's zwischen 4 und 0 ppm/K (Bereich höherer thermischer Ausdehnung im Bereich der Fügestelle) und der damit zu verbindenden Komponente aus einem Material mit Dehnungen im Bereich von CTE=3,5 bis 5,5 ppm/K

Beispiel 3:

- Ausführung beider Komponenten aus einem Material mit Dehnungen im Bereich von CTE=3,5 bis 5,5 ppm/K

Materialbeispiele für die einzelnen Komponenten 2, 3 der Verbindungen:

a) erste oder zweite Komponente, bevorzugt Komponente 2, aus partiell keramisierter LAS-Glaskeramik oder LAS-Glaskeramik mit HochquarzMischkristall
zweite oder erste Komponente, bevorzugt Komponente 3, aus Alloy 42 oder KOVAR
b) erste oder zweite Komponente, bevorzugt Komponente 2, aus MAS-Glaskeramik zweite oder erste Komponente, bevorzugt Komponente 3, aus KOVAR oder Alloy42
c) erste oder zweite Komponente, bevorzugt Komponente 2, aus Hartglas, z.B. Schott Typ 8253
zweite oder erste Komponente, bevorzugt Komponente 3, aus KOVAR oder Alloy42
d) erste oder zweite Komponente, bevorzugt Komponente 2, aus Borosilikatglas z.B. Schott-Bezeichnung Typ 8488 (SUPRAX)
zweite oder erste Komponente, bevorzugt Komponente 3, aus Alloy 42 oder Kovar
e) beide Komponenten aus Hartglas, z.B. SCHOTT Typ 8253
f) erste und zweite Komponente aus Borosilikatglas z.B. bevorzugt Komponente 2 aus Schott-Bezeichnung Typ 8488 (SUPRAX) zweite oder erste Komponente, bevorzugt Komponente 3, aus Glas Typ 8250

Als Lotmaterialien können herkömmliche Pb-Borat Compositgläser mit entsprechenden ausdehnungssenkenden inerten Füllstoffen verwendet werden. Auch ausdehnungsangepasste bleifreifreie Bi-Zn-Borat Compositgläser oder Gläser auf Phosphatbasis lassen sich verwenden.

Speziell verwendet wurden Lote mit folgenden Eigenschaften. Lot A ($CTE_{20/300}$ ~ 4,4 ppm/K; Tg ~ 325°C; $T_{Löt}$: ~440°C) bzw. Lot B ($CTE_{20/300}$ ~ 5,6 ppm/K; Tg ~ 445°C; $T_{Löt}$: 540°C - 570°C)

Demgegenüber verdeutlicht Figur 4 eine Ausführung gemäß Figur 3 frei von einem Lotmaterial, insbesondere Lotring 15. Die Stirnfläche 14 des Hohlkörpers 4 liegt in dieser Ausführung direkt an der Stirnseite 7 der Basisplatte 6 an. Der Innenumfang 20, d.h. die Wirkfläche 10 ist durch den ringförmigen Spalt 17 in radialer Richtung von der Wirkfläche 9 an der Basisplatte 6 im Tieftemperaturzustand getrennt. Die Verbindung erfolgt im Hochtemperaturzustand durch Formschluss. Dabei ist der thermische Ausdehnungskoeffizient $CTE_H \leq CTE_B$.

Beispielsweise finden nachfolgend genannte, durch die Zuordnung zu Ausdehnungsgruppen charakterisierte Materialien zumindest im Verbindungsbereich für die einzelnen miteinander zu verbindenden Komponenten bei einer Ausführung des Verbundsystems 1 gemäß Figur 4 Anwendung:

Beispiel 1:

- Ausführung der ersten oder zweiten Komponente aus einem Material mit Dehnungen im Bereich von CTE=3,5 bis 5,5 ppm/K und der zweiten oder ersten Komponente aus einem Material mit Dehnungen im Bereich von CTE = 5,5 bis 9 ppm/K
- Materialbeispiel für die einzelnen Komponenten 2, 3 der Verbindungen: erste oder zweite Komponente, bevorzugt Komponente 2, aus Borosilikatglas, z.B. Schott-Bezeichnung Typ 8488 (SUPRAX) zweite oder erste Komponente, bevorzugt Komponente 3, aus AIOX

Beispiel 2:

- Ausführung der ersten oder zweiten Komponente aus einem Material mit Dehnungen im Bereich von CTE= 0 bis 1,3 ppm/K und der zweiten oder ersten Komponente aus einem Material mit Dehnungen im Bereich von CTE = 3,5 bis 5,5 ppm/K

- Materialbeispiel:

  erste oder zweite Komponente, bevorzugt Komponente 2, aus LAS Glaskeramik, z.B. Schott-Bezeichnung ROBAX
  zweite oder erste Komponente, bevorzugt Komponente 3, aus KOVAR

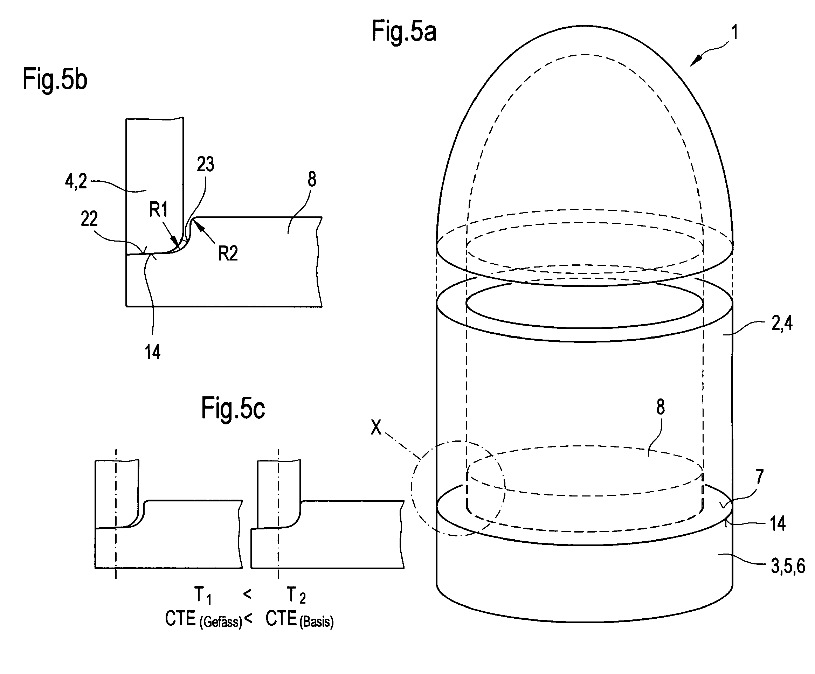

Die Figur 5 verdeutlicht eine Ausführung gemäß Figur 4 mit optimierter Spaltgeometrie. Die Basisplatte 6 besitzt einen größeren Ausdehnungskoeffizienten als der Hohlkörper 4. Letzterer besteht vorzugsweise aus einem nulldehnenden Material. Die Ausführung der Stirnfläche 14 am Hohlkörper 4 wird dabei durch die Form der Basisplatte 6 im Hochtemperaturzustand, insbesondere dem Übergang zwischen Außenumfang der Basisplatte 6 und dem Vorsprung 8 bestimmt. Dieser ist gekrümmt ausgeführt und durch wenigstens einen Radius, vorzugsweise eine Mehrzahl von Radien beschreibbar.

Figur 5b verdeutlicht das Verbundsystem 1 im Tieftemperaturzustand, während Figur 5c die Verhältnisse im Hochtemperaturzustand wiedergibt.

Vom Außenumfang ausgehend an der Basisplatte 6 erstreckt sich dabei ein ebener Flächenbereich 22, an welchen sich der Übergangsbereich 23 anschließt, welcher gekrümmt ausgeführt ist. Die Krümmung erfolgt s-förmig und ist durch wenigstens zwei entgegengesetzt zueinander ausgerichtete Radien R1 und R2 beschreibbar.

Da die Geometrie des Hohlkörpers 4 im Verbindungsbereich an die des Vorsprunges im Hochtemperaturzustand angepasst ist, so dass im Hochtemperaturzustand ein flächiges Anliegen der Innenwand 20 des Hohlkörpers 4 an wenigstens eine Teilfläche des Außenumfanges des Vorsprunges 8 gewährleistet ist, ergibt sich bei Raumtemperatur nur ein flächiges Anliegen im Bereich des Außenumfanges 24 der Basisplatte 6. Der Spalt 17 ist über seine Erstreckung in radialer und vertikaler Richtung durch unterschiedliche Abmessungen charakterisiert. Scherkräfte, die die Basisplatte 6 auf den Hohlkörper 4 aufgrund der Ausdehnung beim Erhitzen ausüben würde, werden durch diese Form minimiert bzw. ganz ausgeschlossen. Die Kontaktfläche zwischen Basisplatte 6 und Hohlkörper 4, insbesondere Stirnfläche 14 ist im Tieftemperaturzustand gemäß Figur 5b eine Ebene, die bezüglich der Mittellinie des Verbundes 1, d.h. die Achse A4 bzw. A6 um 5 bis 30° geneigt sein kann. Die Größe der Kontaktfläche wird dabei durch das Erfordernis der hermetischen Dichtheit bestimmt, die auch bei Raumtemperatur gegeben sein sollte. Im Hochtemperaturzustand liegt zusätzlich die Innenfläche des Hohlkörpers 4 s-förmig an der Basisplatte 6 an. Gleitbewegungen der Basisplatte 6 gegenüber dem Hohlkörper 4 beim Aufheizen und Abkühlen sind nicht zu vermeiden. Durch die Wahl kleiner Form- und Lagetoleranzen und niedriger Haft- und Gleitreibungskoeffizienten an den Kontaktflächen, vorzugsweise $\mu$ < 0,1 über den gesamten Betriebstemperaturbereich ist jedoch eine hermetische Dichtheit gewährleistet.

Beispielsweise finden nachfolgend genannte, durch die Zuordnung zu Ausdehnungsgruppen charakterisierte Materialien zumindest im Verbindungsbereich für die einzelnen miteinander zu verbindenden Komponenten bei einer Ausführung des Verbundsystems 1 gemäß Figur 5 Anwendung:

Beispiel 1:

- Ausführung der ersten oder zweiten Komponente aus einem Material mit Dehnungen im Bereich von CTE=3,5 bis 5,5 ppm/K und der zweiten oder ersten Komponente aus einem Material mit Dehnungen im Bereich von CTE = 1,3 bis 3,5 ppm /K.

Materialbeispiel für die einzelnen Komponenten 2, 3 der Verbindungen:

a) erste oder zweite Komponente, bevorzugt Komponente 2, aus Glas, Schott-Bezeichnung Typ 8228
zweite oder erste Komponente, bevorzugt Komponente 2, aus KOVAR

Die Figuren 6, 7, 8, 10 und 11, 12 verdeutlichen Ausführungen gemäß einer der Figuren 1 bis 4, wobei die Ausdehnung des Hohlkörpers 4 in radialer Richtung jedoch beidseitig begrenzt ist. Dazu wird die Basisplatte 6 mit einer Sicke oder, einer Nut 25 ausgeführt. Die Nut 25 ist im Bereich des Außendurchmessers dA6 der Basisplatte 6 angeordnet und verläuft ringförmig im Abstand vom Außenumfang dA6. Je nach Ausführung, insbesondere Dimensionierung der Nut 25 wird der Verbund zwischen den einzelnen Komponenten im Verbundsystem 1 durch Formschluss oder durch eine Kombination aus Stoff- und Formschluss realisiert.

Figur 6 verdeutlicht eine Ausführung mit Kopplung des Hohlkörpers 4 mittels Stoffschluss über einen Lotring 15 und zumindest im Hochtemperaturzustand mittels Formschluss aufgrund der Ausdehnung der einzelnen Komponenten 2, 3 an die Basisplatte 6. Die Nut 25 ist dabei durch ein Tiefenmaß t25 und Breitenmaß b25 charakterisiert, welches im Raumtemperaturzustand ein flächiges Anliegen des Hohlkörpers 4 mit seiner Innen- und Außenfläche im Eintauchbereich in die Nut 25 sowohl an der inneren und der äußeren Nutwand 26, 27 gewährleistet und ferner noch den Lotring 15 aufnimmt. Die Tiefe t25 beträgt dabei vorzugsweise das 0,5- bis 5fache der Breite b25 bzw. das 1,5- bis dreifache der Lotringdicke D. Das Breitenmaß b25 entspricht mit Toleranz im Bereich von 0,01 bis 1 % der Dicke der Wand 12 des Hohlkörpers 4 im Verbindungsbereich.

Bei dieser Ausführung sind die Ausdehnungskoeffizienten der einzelnen Komponenten 2, 3 und des Lotmaterials aufeinander abgestimmt, wobei $CTE_H \sim CTE_B \sim CTE_{Lot}$ entsprechen.

Beispielsweise finden nachfolgend genannte Materialkombinationen zumindest im Verbindungsbereich für die einzelnen miteinander zu verbindenden Komponenten bei einer Ausführung des Verbundsystems 1 gemäß Figur 6 Anwendung:

Beispiel 1:

- Ausführung der ersten oder zweiten Komponente aus einem Gradientenwerkstoff mit CTE zwischen 4 und 0 ppm/K und der damit zu verbindenden Komponente aus einem Material mit Dehnungen im Bereich von CTE=3,5 bis 5,5 ppm/K

Beispiel 2:

- Ausführung beider Komponenten aus einem Material mit Dehnungen im Bereich von CTE=3,5 bis 5,5 ppm/K

Materialbeispiele für die einzelnen Komponenten 2, 3 der Verbindungen:

a) erste oder zweite Komponente, bevorzugt Komponente 2, aus partiell keramisierter LAS-Glaskeramik zweite oder erste Komponente, bevorzugt Komponente 3, aus Alloy 42

b) erste oder zweite Komponente, bevorzugt Komponente 2, aus MAS-Glaskeramik zweite oder erste Komponente, bevorzugt Komponente 3, aus KOVAR oder Alloy42

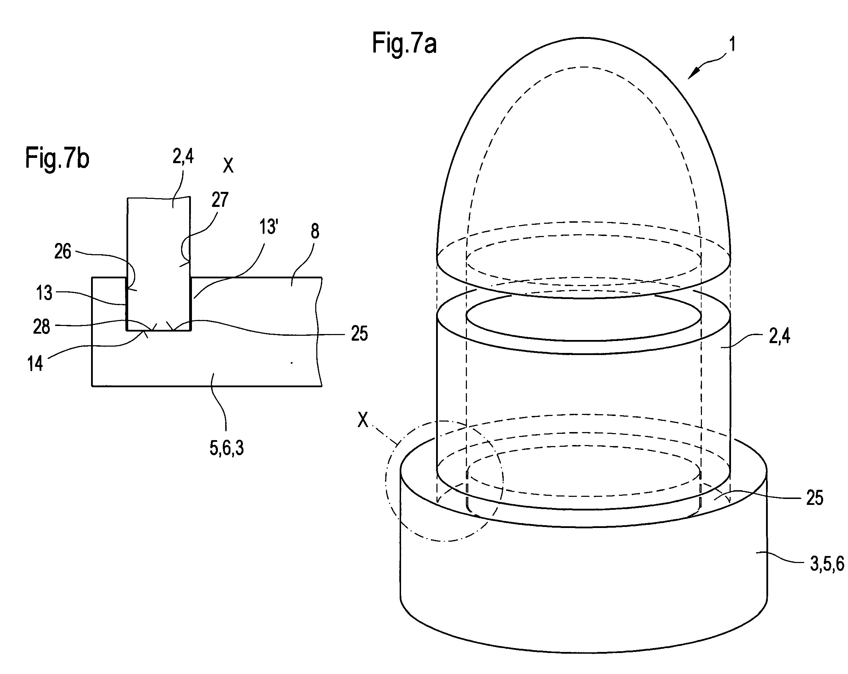

Demgegenüber verdeutlicht Figur 7 eine Ausführung gemäß Figur 6 frei von einem Lotmaterial. In diesem Fall wird der Verbund der einzelnen Komponenten 2, 3 allein durch Formschluss aufgrund der Ausnutzung der während der Erwärmung und der Abkühlung vorherrschenden Spannungszustände bzw.
Unterdruckregimes erzeugt. Der Grundaufbau des Verbundsystems 1, insbesondere der Einzelkomponenten 2, 3 entspricht dem in Figur 1 beschriebenen, wobei zwischen der Stirnfläche 14 des Hohlkörpers 4 und der Stirnfläche 7 an der Basisplatte 6 kein Lotmaterial vorgesehen ist, diese jedoch aneinander anliegen. Der Verbund erfolgt allein durch Formschluss. Voraussetzung dafür ist die Verwendung von Materialien mit annähernd gleicher thermischer Wärmeausdehnung zwischen den zu fügenden Komponenten, d. h. $CTE_H \sim CTE_B$.

Die Nut 25 nimmt dabei die Wand 12 des Hohlkörpers 4 auf. Die in radialer Richtung weisenden Nutwände 26 und 27 bilden dabei auch im Tieftemperaturzustand mit der Außenfläche 21 des Hohlkörpers 4 und der Innenfläche 20 jeweils ein Wirkflächenpaar 13 und 13'. Die Stirnfläche 14 des Hohlkörpers 4 liegt am Nutboden 28 an. Bei Erwärmung baut sich dann ein Druck auf die Wand 12 des Hohlkörpers 4 auf.

Es finden beispielsweise folgende Materialkombinationen für die einzelnen miteinander zu verbindenden Komponenten zumindest im Verbindungsbereich bei einer Ausführung des Verbundsystems 1 gemäß Figur 7 Anwendung:

Beispiel 1:

- Ausführung der ersten und zweiten Komponente aus einem Null- oder niedrigdehnenden Material mit einer thermischen Ausdehnung CTE zwischen 0 und 1,3 ppm/K

Materialbeispiel für die einzelnen Komponenten 2, 3 der Verbindungen:

a) erste und zweite Komponente aus Kieselglas

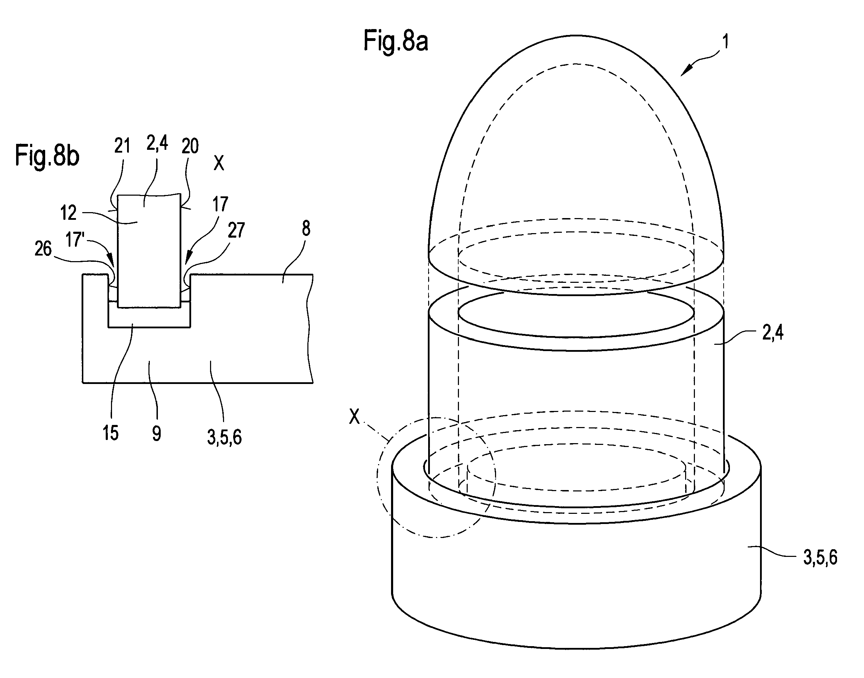

Figur 8 verdeutlicht demgegenüber eine Ausführung gemäß Figur 6 mit beidseitigem Spalt 17, 17'und Lotring 15. Die Nut 25 ist dabei durch ein Breitenmaß b25 im Tieftemperaturzustand charakterisiert, welches um einige % größer als die Wandstärke der Wand 12 des Hohlkörpers 4 in diesem Temperaturzustand ist. Dadurch bilden sich im Tieftemperaturzustand zwischen der Innenfläche 20 und der vom Vorsprung 8 gebildeten Wirkfläche 9, welche der radial inneren Nutwandung 27 entspricht, ein erster radialer Spalt 17, und zwischen der Außenfläche 21 des Hohlkörpers 4 und der radial äußeren Nutwand 26 ein zweiter Spalt 17'. Der Hohlkörper 4 liegt dabei mit seiner Stirnfläche 14 nicht am Nutboden 29 an, sondern ist über einen Lotring 15 mit diesem verbunden. Der Lotring 15 füllt dabei auch die Spalte 17 und 17'wenigstens teilweise senkrecht zur radialen Richtung aus.

Auch die Ausführung gemäß Figur 8 erlaubt die Verwendung von Materialien mit unterschiedlichen Wärmeausdehnungskoeffizienten. Die Unterschiede werden über das Lotmaterial ausgeglichen. Dabei ist $CTE_H \leq CTE_B$, wobei $CTE_{Lot} \leq CTE_B$ oder $CTE_{Lot} \geq CTE_B$.

Die Verbindung erfolgt immer stoffschlüssig. Zusätzlich kann ein Formschluss im Hochtemperaturzustand aufgrund der Dimensionierung der miteinander zu koppelnden Komponenten erzeugt werden.

Es finden beispielsweise folgende Materialkombinationen für die einzelnen miteinander zu verbindenden Komponenten zumindest im Verbindungsbereich bei einer Ausführung des Verbundsystems 1 gemäß Figur 8 Anwendung:

Beispiel 1:

- Ausführung der ersten oder zweiten Komponente aus einem Gradientenwerkstoff mit CTE's zwischen 4 und 0 ppm/K und der damit zu verbindenden Komponente aus einem Material mit Dehnungen im Bereich von CTE=3,5 bis 5,5 ppm/K

Materialbeispiel für die einzelnen Komponenten 2, 3 der Verbindungen:

a) erste oder zweite Komponente, bevorzugt Komponente 2, aus partiell keramisierter LAS-Glaskeramik und zweite oder erste Komponente, bevorzugt Komponente 3, aus Alloy 42

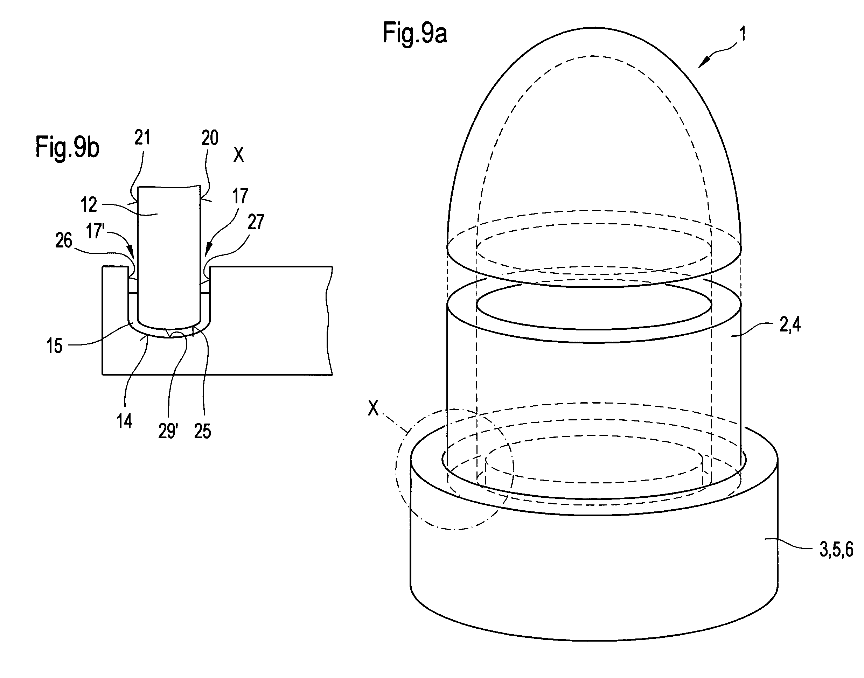

Figur 9 verdeutlicht eine Ausführung gemäß Figur 8 mit gerundeter Nutbodenausführung. Durch den gekrümmt ausgeführten Nutboden 29' und die dementsprechend vorzugsweise ebenfalls gekrümmte Ausführung der Übergänge zu den Nutwänden 26, 27 werden Spannungen homogener verteilt. Die Stirnfläche 14 des Hohlkörpers 4 ist an die Ausführung des Nutbodens 29 angepasst, d.h. ebenfalls gerundet ausgeführt. Für die Wahl der Materialien für die einzelnen Komponenten hinsichtlich der thermischen Ausdehnung gelten die gleichen Vorgaben wie für Figur 8.

Die Verbindung erfolgt immer stoffschlüssig. Zusätzlich kann ein Formschluss im Hochtemperaturzustand aufgrund der Dimensionierung der miteinander zu koppelnden Komponenten erzeugt werden.

Es finden beispielsweise folgende Materialkombinationen für die einzelnen miteinander zu verbindenden Komponenten zumindest im Verbindungsbereich bei einer Ausführung des Verbundsystems 1 gemäß Figur 9 Anwendung:

Beispiel 1:

- Ausführung der ersten oder zweiten Komponente aus einem Gradientenwerkstoff mit CTE's zwischen 4 und 0 ppm/K und der damit zu verbindenden Komponente aus einem Material mit Dehnungen im Bereich von CTE=0 bis 1,3 ppm/K

Materialbeispiel für die einzelnen Komponenten 2, 3 der Verbindungen:

a) erste oder zweite Komponente, bevorzugt Komponente 2, aus partiell keramisierter LAS-Glaskeramik hQMK und zweite oder erste Komponente , bevorzugt Komponente 3, aus LAS-Glaskeramik.

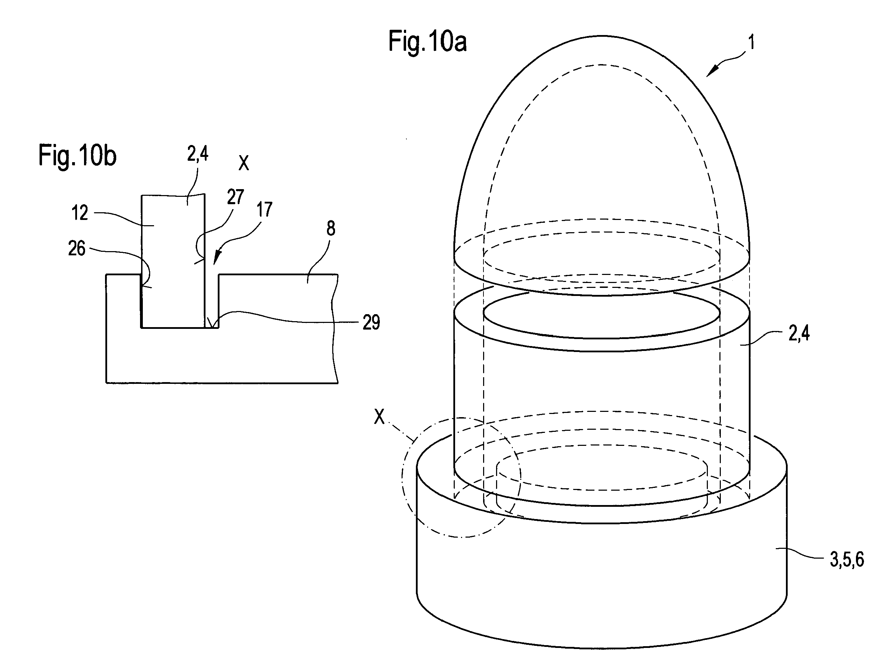

Die Figur 10 verdeutlicht demgegenüber eine Ausführung gemäß Figur 7 mit einseitigem Spalt 17 zwischen dem Vorsprung 8 und dem Innenumfang 20 des Hohlkörpers 4. Dieser verläuft ringförmig zwischen Hohlkörper 4 und Vorsprung 8.

Beispielsweise finden nachfolgend genannte durch die Zuordnung zu Ausdehnungsgruppen charakterisierte Materialien zumindest im Verbindungsbereich für die einzelnen miteinander zu verbindenden Komponenten bei einer Ausführung des Verbundsystems 1 gemäß Figur 10 Anwendung:

Beispiel 1:

- Ausführung der ersten oder zweiten Komponente aus einem Material mit Dehnungen im Bereich von CTE=1,3 bis 3,5 ppm/K und der damit zu verbindenden Komponente aus einem Material mit Dehnungen im Bereich von CTE=5,5 bis 9,0 ppm/K.

Materialbeispiel für die einzelnen Komponenten 2, 3 der Verbindungen:

a) erste oder zweite Komponente, bevorzugt Komponente 2, aus Übergangsglas 8228
zweite oder erste Komponente, bevorzugt Komponente 3, aus DUMET

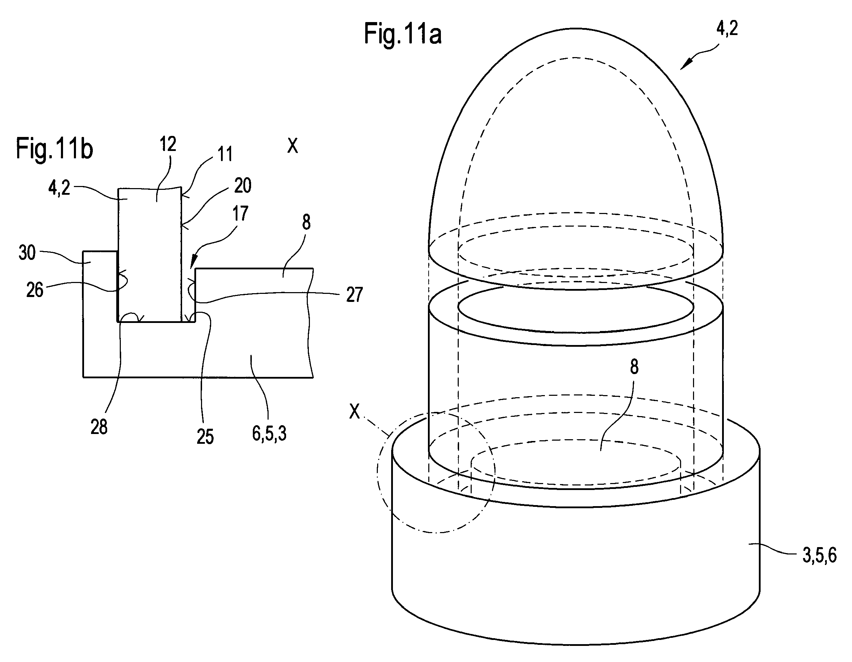

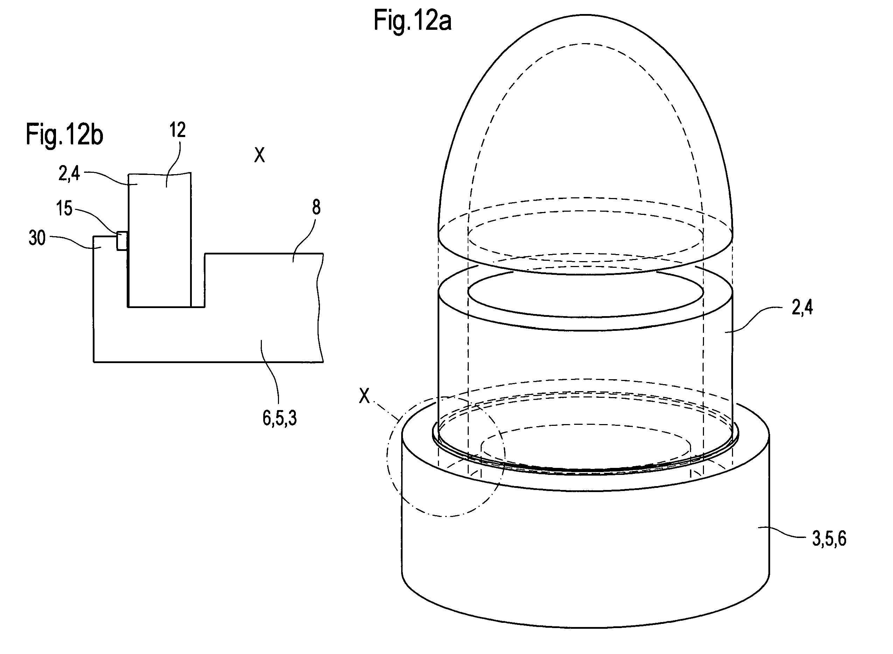

In einer weiteren Ausführungsform gemäß der Figuren 11 und 12 wird die Basisplatte 6 auf den Hohlkörper 4 in Form eines Lampengefäßes heiß aufgeschrumpft. Das Lampengefäß weist z.B. thermische Nullausdehnung auf, die Basisplatte 6 besteht aus positiv dehnender Metalllegierung. Die Basisplatte 6 verfügt über eine in Umfangsrichtung, d.h. mit Abstand vom Außenumfang der Basisplatte 6 verlaufenden ringförmige Nut 25 in Form eines Ringspaltes, dessen Öffnungsweite, d.h. Beite b25 größer ist als die Dicke der Wand 12 des Hohlkörpers 4, so dass sich einseitig ein Spalt 17 zwischen Wand 12 und Außenumfang es Vorsprunges 8 an der Basisplatte 6 ergibt. Der Außendurchmesser dA25 des Ringspaltes ist abgestimmt auf die thermische Dehnung des Basisplattenmaterials, so dass er bei Betriebstemperatur der Lampe genau dem Außendurchmesser dA4 des Hohlkörpers 4, insbesondere Lampengefäßes entspricht. Bei Raumtemperatur übt der Basisplatten-Steg 30 somit Druck auf das Lampengefäß aus und dichtet es somit hermetisch. Insofern höhere Fertigungstoleranzen ermöglicht werden sollen, die eine hermetische Dichtigkeit des Schrumpf-Verbundes nicht mehr gewährleisten, kann zusätzlich die Einbringung eines Lotringes 15 erfolgen. Die Materialdeckung, die sowohl der Steg 30 der Basisplatte 6 als auch das Lampengefäß, d.h. der Hohlkörper 4 aufweisen müssen, um die Drücke, die durch das Aufschrumpfen entstehen, aufzunehmen, werden durch den CTE-Unterschied der verwendeten Materialien bestimmt und sind vom Fachmann leicht berechenbar.

Wird bei einer Ausführung gemäß Figur 10 im Tieftemperaturbereich nahezu Spannungsfreiheit angenommen, wird demgegenüber bei einer Ausführung gemäß Figur 11 durch das Aufschrumpfen Druck auf den Hohlkörper 4 ausgeübt. Im Hochtemperaturbereich ist der Hohlkörper in Abb. 10 unter Druckspannung im Bereich der Nut, in Abb. 11 ist der Hohlkörper nahezu spannungsfrei.

Beispielsweise finden nachfolgend genannte durch die Zuordnung zu Ausdehnungsgruppen charakterisierte Materialien zumindest im Verbindungsbereich für die einzelnen miteinander zu verbindenden Komponenten bei einer Ausführung des Verbundsystems 1 gemäß Figur 11 oder 12 Anwendung:

Beispiel:

- Ausführung der ersten oder zweiten Komponente aus einem Material mit Dehnungen im Bereich von CTE= 0-1,3 ppm/K und der damit zu verbindenden Komponente aus einem Material mit Dehnungen im Bereich von CTE=3,5 bis 5,5 ppm/K

Materialbeispiele für die einzelnen Komponenten 2, 3 der Verbindungen:

a) erste oder zweite Komponente, bevorzugt Komponente 2, aus LAS Glaskeramik mit Hochquarz-Mischkristallphase zweite oder erste Komponente, bevorzugt Komponente 3, aus KOVAR oder Alloy42
b) erste oder zweite Komponente, bevorzugt Komponente 2, aus Kieselglas zweite oder erste Komponente, bevorzugt Komponente 3, aus KOVAR oder Alloy42

Bezugszeichenliste

| 1 | Verbundsystem |
| 2 | erste Komponente |
| 3 | zweite Komponente |
| 4 | Hohlkörper |
| 5 | scheibenförmiges Element |
| 6 | Basisplatte |
| 7 | zum Hohlkörper weisende Stirnfläche am Basiskörper |
| 8 | Vorsprung |
| 9 | Wirkfläche |
| 10 | Wirkfläche |

| | |
|---|---|
| 11 | Innenumfang |
| 12 | Wand |
| 13 | Wirkflächenpaar |
| 14 | Stirnfläche |
| 15 | Lotring |
| 16 | Flächenbereich |
| 17 | Spalt |
| 18 | erster Endbereich |
| 19 | zweiter Endbereich |
| 20 | Innenfläche |
| 21 | Außenfläche |
| 22 | Flächenbereich |
| 23 | Übergangsbereich |
| 24 | Außenumfang |
| 25 | Nut |
| 26 | Nutwand |
| 27 | Nutwand |
| 28 | Nutboden |
| 29 | gekrümmt ausgeführter Nutboden |
| 30 | Steg |
| da | Außendurchmesser des Vorsprunges an der Basisplatte |
| di | Innendurchmesser des Hohlkörpers |
| dA6 | Außendurchmesser der Basisplatte |
| dA4 | Außendurchmesser des Hohlkörpers |
| b25 | Breite |
| t25 | Tiefe |

**Patentansprüche**

1. Verbundsystem (1), umfassend wenigstens zwei Komponenten, eine erste Komponente (2) und eine zweite Komponente (3), wobei wenigstens eine der beiden wenigstens teilweise, vorzugsweise vollständig aus Glas oder Glaskeramik besteht

    1.1 beide Komponenten (2, 3) sind im Fügebereich über ein Lotmaterial (15) miteinander stoffschlüssig verbunden; **gekennzeichnet durch** die folgenden Merkmale:
    1.2 das Lotmaterial (15) ist anorganisch, glasbasierend;
    1.3 der **durch** Stoffschluss erzielte Verbund ist hermetisch dicht und temperaturstabil bis zu Temperaturen $\geq$ 350°C, vorzugsweise $\geq$ 450°C.

2. Verbundsystem (1), umfassend wenigstens zwei Komponenten, eine erste Komponente (2) und eine zweite Komponente (3), wobei wenigstens eine der beiden wenigstens teilweise aus Glas oder Glaskeramik besteht, **dadurch gekennzeichnet, dass** die Komponenten (2, 3) zumindest im Hochtemperaturbereich bei T$\geq$ 50°C im Verbindungsbereich über einen Verschlussmechanismus verbunden sind, der durch Spannungszustände an den miteinander zu verbindenden Komponenten erzeugt ist.

3. Verbundsystem (1) nach Anspruch 2, **dadurch gekennzeichnet, dass** eine der Komponenten (2, 3) von einem Hohlkörper (4) mit einer Öffnung und die zweite Komponente (3, 2) von einem Verschlusselement für die Öffnung gebildet wird und zwischen den beiden Komponenten (2, 3) ein Unterdruck angelegt ist.

4. Verbundsystem (1) nach einem der Ansprüche 2 oder 3, **dadurch gekennzeichnet, dass** der Verschlussmechanismus einen Formschluss zwischen beiden Komponenten (2, 3) umfasst.

5. Verbundsystem (1) nach Anspruch 4, **dadurch gekennzeichnet, dass** der Formschluss zwischen von den Komponenten (2, 3) gebildeten Wirkflächen erzeugt ist.

6. Verbundsystem (1) nach einem der Ansprüche 2 bis 5, **dadurch gekennzeichnet, dass** die Verbindung frei von Lotmaterial erfolgt.

7. Verbundsystem (1) nach einem der Ansprüche 2 bis 5, **dadurch gekennzeichnet, dass** die beiden miteinander zu fügenden Komponenten (2, 3) zusätzlich stoffschlüssig miteinander verbunden sind.

8. Verbundsystem (1) nach Anspruch 7 **dadurch gekennzeichnet, dass** der Stoffschluss eine Lötverbindung umfasst, wobei das Lotmaterial (15) anorganisch, glasbasierend ist und der durch Stoffschluss erzielte Verbund hermetisch dicht und temperaturstabil bis zu Temperaturen $\geq 350°C$, vorzugsweise $\geq 450°C$.

9. Verbundsystem (1) nach einem der Ansprüche 4 bis 8, **dadurch gekennzeichnet, dass** der Formschluss durch Wärmeausdehnung der miteinander zu verbindenden Komponenten (2, 3) erzeugt ist.

10. Verbundsystem (1) nach Anspruch 9, **dadurch gekennzeichnet, dass** die miteinander zu verbindenden Komponenten (2, 3) im Verbindungsbereich Wirkflächen (9, 10) aufweisen, deren Geometrie und Abmessungen derart ausgeführt sind, dass diese zumindest im Hochtemperaturbereich eine Übergangs- oder Presspassung bilden.

11. Verbundsystem (1) nach einem der Ansprüche 9 oder 10, **dadurch gekennzeichnet, dass** die miteinander zu verbindenden Komponenten (2, 3) im Verbindungsbereich Wirkflächen (9, 10) aufweisen, deren Geometrie und Abmessungen derart ausgeführt sind, dass diese im Tieftemperaturbereich eine Übergangs- oder Presspassung bilden.

12. Verbundsystem (1) nach einem der Ansprüche 1 bis 11, **dadurch gekennzeichnet, dass** die erste und die zweite Komponente (2, 3) aus Materialen mit gleichem Wärmeausdehnungskoeffizienten (CTE) bestehen.

13. Verbundsystem (1) nach Anspruch 12, **dadurch gekennzeichnet, dass** die erste und die zweite Komponente (2, 3) aus einem Nulldehnenden bzw. niedrigdehnende Material mit einem Wärmeausdehnungskoeffiziente von $0 \leq CTE_{20/300} \leq 1,3$ ppm/K bestehen.

14. Verbundsystem (1) nach Anspruch 12, **dadurch gekennzeichnet, dass** die erste und die zweite Komponente (2, 3) aus einem Gradientenwerkstoff mit einem Wärmeausdehnungskoeffizienten von $0 \leq CTE_{20/300} \leq 5$ ppm/K wobei die spätere Wirkfläche niedrigdehnend, z.B. nulldehnend ist, bestehen.

15. Verbundsystem (1) nach Anspruch 12, **dadurch gekennzeichnet, dass** die erste und die zweite Komponente (2, 3) aus Materialien mit Dehnungen im Bereich von einschließlich $CTE_{20/30}=1,3$ bis einschließlich 3,5 ppm/K bestehen.

16. Verbundsystem (1) nach Anspruch 12, **dadurch gekennzeichnet, dass** die erste und die zweite Komponente (2, 3) aus Materialien mit Dehnungen im Bereich von einschließlich $CTE_{20/30} = 3,5$ bis einschließlich 5,5 ppm/K bestehen.

17. Verbundsystem (1) nach Anspruch 12, **dadurch gekennzeichnet, dass** die erste und die zweite Komponente (2, 3) aus Gradientenwerkstoffen mit einem Wärmeausdehnungskoeffizienten von einschließlich $5 \geq CTE_{20/300} \geq 0$ ppm/K bestehen, wobei die spätere Wirkfläche hochdehnend ist, z.B. $CTE_{20/300} \sim 4,0$ ppm/K.

18. Verbundsystem (1) nach Anspruch 12, **dadurch gekennzeichnet, dass** die erste und die zweite Komponente (2, 3) aus Materialien mit Dehnungen im Bereich von $CTE_{20/300} = $ einschließlich 5,5 bis einschließlich 9 ppm/K bestehen.

19. Verbundsystem (1) nach einem der Ansprüche 1 bis 11, **dadurch gekennzeichnet, dass** die erste und die zweite Komponente (2, 3) aus Materialen mit unterschiedlichem Wärmeausdehnungskoeffizienten (CTE) bestehen.

20. Verbundsystem (1) nach Anspruch 19, **dadurch gekennzeichnet, dass** die erste oder die zweite Komponente (2, 3) aus einem Nulldehnenden bzw. niedrigdehnende Material mit einem Wärmeausdehnungskoeffiziente von $0 \leq CTE_{20/300} \leq 1,3$ ppm/K besteht.

21. Verbundsystem (1) nach Anspruch 19 oder 20, **dadurch gekennzeichnet, dass** die erste oder die zweite Komponente (2, 3) aus einem Gradientenwerkstoff mit einem Wärmeausdehnungskoeffizienten von $0 \leq CTE_{20/300} \leq 5$ ppm/K wobei die spätere Wirkfläche niedrigdehnend, z.B. nulldehnend ist, besteht.

22. Verbundsystem (1) nach einem der Ansprüche 19 bis 21, **dadurch gekennzeichnet, dass** die erste oder die zweite Komponente (2, 3) aus Material mit Dehnungen im Bereich von einschließlich $CTE_{20/30} = 1,3$ bis einschließlich 3,5 ppm/K besteht.

23. Verbundsystem (1) nach einem der Ansprüche 19 bis 22, **dadurch gekennzeichnet, dass** die erste oder die zweite Komponente (2, 3) aus einem Material mit Dehnungen im Bereich von einschließlich $CTE_{20/30}$ = 3,5 bis einschließlich 5,5 ppm/K besteht.

24. Verbundsystem (1) nach einem der Ansprüche 19 bis 23, **dadurch gekennzeichnet, dass** die erste oder die zweite Komponente (2, 3) aus einem Gradientenwerkstoff mit einem Wärmeausdehnungskoeffizienten von einschließlich $5 \geq CTE_{20/300} \geq 0$ ppm/K besteht, wobei die spätere Wirkfläche hochdehnend ist, z.B. $CTE_{20/300} \sim 4{,}0$ ppm/K.

25. Verbundsystem (1) nach einem der Ansprüche 19 bis 24, **dadurch gekennzeichnet, dass** die erste oder die zweite Komponente (2, 3) aus einem Material mit Dehnungen im Bereich von $CTE_{20/300}$ = einschließlich 5,5 bis einschließlich 9 ppm/K besteht.

26. Verbundsystem (1) nach einem der Ansprüche 1 bis 25, **gekennzeichnet durch** die folgenden Merkmale:

    26.1 die erste Komponente (2) ist als Hohlkörper (4) ausgeführt und die zweite Komponente (3) als scheibenförmiges Element (5);
    26.2 das scheibenförmige Element (5) weist an seiner zum Hohlkörper (4) ausgerichteten Fläche wenigstens einen scheiben - oder ringförmig ausgeführten Vorsprung (8) auf.

27. Verbundsystem (1) nach Anspruch 26, **dadurch gekennzeichnet, dass** der Vorsprung (8) im Mittenbereich des scheibenförmigen Elementes (5) angeordnet ist und der Innenumfang (20) des Hohlkörpers (4) im Verbindungsbereich einen gleichen oder größeren Durchmesser als der Außenumfang des Vorsprunges (8) aufweist.

28. Verbundsystem (1) nach Anspruch 27, **dadurch gekennzeichnet, dass** wenigstens ein Teilbereich des Außenumfanges des Vorsprunges (8) und der zum scheibenförmigen Element ausgerichteten Fläche oder Flächen am Hohlkörper (4), insbesondere Innenumfang (20) und zum scheibenförmigen Element weisende Stirnfläche als wenigstens mittelbar miteinander verbundene Wirkflächen (9, 10) ausgeführt sind.

29. Verbundsystem (1) nach einem der Ansprüche 27 bis 28, **dadurch gekennzeichnet, dass** zwischen Hohlkörper (4) und Außenumfang am Vorsprung (8) im Tieftemperaturzustand ein ringförmiger Spalt vorgesehen ist.

30. Verbundsystem (1) nach einem der Ansprüche 25 bis 29, **dadurch gekennzeichnet, dass** der Vorsprung als ringförmiger Vorsprung im Bereich des Außenumfanges des scheibenförmigen Elementes erfolgt und der Innen- oder Außendurchmesser des Hohlkörpers (4) im Verbindungsbereich gleich oder größer als der Außendurchmesser des ringförmigen Vorsprunges oder der Außendurchmesser des Hohlkörpers (4) im Verbindungsbereich gleich oder kleiner als der Innendurchmesser des ringförmigen Vorsprunges ist.

31. Verbundsystem (1) nach Anspruch 30, **dadurch gekennzeichnet, dass** zwischen Hohlkörper (4) und Vorsprung (8) im Tieftemperaturzustand ein Spalt (17) vorgesehen ist.

32. Verbundsystem (1) nach Anspruch 30 oder 31, **dadurch gekennzeichnet, dass** bei Vorsehen zweier Vorsprünge unter Bildung einer Nut oder Sicke die Vorsprünge durch gleiche oder unterschiedliche Höhen gegenüber der Stirnfläche am scheibenförmigen Element (5) charakterisiert sind.

33. Verbundsystem (1) nach einem der Ansprüche 25 bis 32, **dadurch gekennzeichnet, dass** der Hohlkörper (4) als einseitig offener Kolben ausgeführt ist.

34. Verbundsystem (1) nach einem der Ansprüche 25 bis 32, **dadurch gekennzeichnet, dass** der Hohlkörper (4) als rohrförmiges Element ausgeführt ist.

35. Verbundsystem (1) nach einem der Ansprüche 1 oder 8, **dadurch gekennzeichnet, dass** als Lotmaterial (15) Pb-Borat Compositglas eingesetzt wird.

36. Verbundsystem (1) nach einem der Ansprüche 1 oder 8, **dadurch gekennzeichnet, dass** als Lotmaterial (15) Bi-Zn-Borat Compositglas eingesetzt wird.

37. Verbundsystem (1) nach einem der Ansprüche 1 oder 8, **dadurch gekennzeichnet, dass** als Lotmaterial (15) Compositgläser auf Phosphatbasis eingesetzt werden.

**38.** Verfahren zur Herstellung eines Verbundsystems (1) gemäß einem der Ansprüche 1 oder 8, **dadurch gekennzeichnet, dass** die miteinander zu verbindenden Komponenten (2, 3) in ihrer Lage zueinander positioniert werden, wobei das Lotmaterial (15) zwischen den Verbindungsflächen angeordnet wird und der Verlötvorgang durch eines der nachfolgenden Verfahren vorgenommen wird:

a) thermisch, z.B. durch Heizstrahler
b) durch kurzwellige Infrarotstrahlung (kIR)
c) durch Laserverschmelzung
d) durch Hochfrequenzheizung

**39.** Verfahren zur Herstellung eines Verbundsystems (1) gemäß Anspruch 2, **dadurch gekennzeichnet, dass** der zwischen den Komponenten (2, 3) gebildete Hohlraum evakuiert wird.

**40.** Verfahren zur Herstellung eines Verbundsystems nach einem der Ansprüche 4 bis 37, **dadurch gekennzeichnet, dass** der Formschluss als Funktion der geometrischen Abmessungen und/oder Materialauswahl im Verbindungsbereich erzeugt wird.

**41.** Leuchtvorrichtung, **dadurch gekennzeichnet, dass** die Leuchtvorrichtung ein Verbundsystem (1) gemäß einem der Ansprüche 1 bis 37 umfasst.

**42.** Leuchtvorrichtung nach Anspruch 41, **dadurch gekennzeichnet, dass** die Leuchtvorrichtung ein Temperaturstrahler ist.

**43.** Leuchtvorrichtung gemäß Anspruch 42, **dadurch gekennzeichnet, dass** der Temperaturstrahler eine Glühbirne oder ein Halogenstrahler ist.

**44.** Leuchtvorrichtung gemäß Anspruch 43, **dadurch gekennzeichnet, dass** die primäre Lichtaussendung des Temperaturstrahlers von einer erhitzten Wendel aus Wolframmetall oder Wolframlegierung erfolgt, welche umgeben ist von Schutzgasen, insbesondere von Krypton, Argon, Xenon oder Halogeniden.

**45.** Leuchtvorrichtung nach einem der Ansprüche 41 bis 43 **dadurch gekennzeichnet, dass** im Innern des Körpers der Leuchtvorrichtung ein Gasinnendruck von bis zu 25 bar im Betrieb aufgebaut ist.

**46.** Leuchtvorrichtungen nach Anspruch 41, **dadurch gekennzeichnet, dass** die Leuchtvorrichtung eine Entladungslampe ist.

**47.** Leuchtvorrichtung nach Anspruch 46, **dadurch gekennzeichnet, dass** die Entladungslampe einen Entladungsraum umfasst und der Entladungsraum mit Entladungsstoffen wie Quecksilber und/oder Selten- Erdionen und/oder mit Xenon gefüllt ist

**48.** Leuchtvorrichtung nach Anspruch 45 bis 47, **dadurch gekennzeichnet, dass** der Entladungsraum einen Entladungskörper umfasst.

**49.** Leuchtvorrichtung nach Anspruch 47 oder 48, **dadurch gekennzeichnet, dass** auf die Innenseite des Körpers eine Fluoreszenzschicht aufgebracht ist, die dazu dient, UV Anteile aus dem Entladungsprozess, insbesondere UV-Anteilen des Quecksilbers in sichtbares Licht zu konvertieren.

**50.** Leuchtvorrichtung nach einem der Ansprüche 45 bis 49, **dadurch gekennzeichnet, dass** der Körper ein Füllgas umfasst und das Füllgas unter einem Druck von bis zu 200 bar oder mehr als 200 bar steht.

**51.** Leuchtvorrichtung nach Anspruch 46, **dadurch gekennzeichnet, dass** die Leuchtvorrichtung eine Metallhalogenid-Entladungslampe ist.

**52.** Leuchtvorrichtung nach Anspruch 46, **dadurch gekennzeichnet, dass** die Leuchtvorrichtung einen Außenkolben umfasst, in dem ein Brennersystem eingelassen ist.

Fig.1b

Fig.1a

EP 1 770 743 A2

Fig.2a

Fig.2b

EP 1 770 743 A2

## Fig.3a

## Fig.3b

EP 1 770 743 A2

Fig.4b

Fig.4a

Fig.5a

Fig.5b

Fig.5c

$T_1 < T_2$

$CTE_{(Gef\ddot{a}ss)} < CTE_{(Basis)}$

27

Fig.6b

Fig.6a

EP 1 770 743 A2

Fig.7a

Fig.7b

EP 1 770 743 A2

Fig.8a

Fig.8b

Fig.9a

Fig.9b

Fig.10a

Fig.10b

1

2,4

X

12

27

17

26

8

29

2,4

X

3,5,6

EP 1 770 743 A2

Fig.11b

Fig.11a

EP 1 770 743 A2

Fig.12a

Fig.12b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19747355 C1
- DE 19758481 C1
- DE 19747354 C1
- EP 748780 B1
- GB 1139622 A
- WO 2004077490 A1
- DE 19938807
- DE 19938808
- DE 19938811
- DE 10118260
- DE 10348466
- WO 2005066088 A

**In der Beschreibung aufgeführte Nicht-Patentliteratur**

- **DERRA et al.** UHP-Lampen: Lichtquellen extrem hoher Leuchtdichte für das Projektionsfernsehen. *Phys. Bl.,* 1998, vol. 54 (9), 817-820
- **HEINZ G. PFAENDER.** SCHOTT Glaslexikon. mvg-Verlag, 122-128
- **KRELL et al.** Transparent sintered corundum with high hardness and strength. *J. Am. Ceram. Soc.,* 2003, vol. 86 (4), 546-553